# EUROPEAN PATENT APPLICATION

(11) **EP 4 012 120 A1**
(43) Date of publication of application: **15.06.2022**
(21) Application number: 20849580.4
(22) Date of filing: 06.08.2020
(51) Int. Cl.: E02F 9/26

(54) **EXCAVATOR AND INFORMATION PROCESSING DEVICE**

(30) Priority: 08.08.2019 JP 2019146716
(71) Applicant: Sumitomo Construction Machinery Co., Ltd., Tokyo 141-6025 (JP)
(72) Inventor: KUROSAWA, Ryota, Chiba-shi, Chiba 263-0001 (JP)
(74) Representative: Louis Pöhlau Lohrentz
(86) International application number: PCT/JP2020/030219
(87) International publication number: WO 2021/025123

(57) **Abstract**

A technique that makes it possible to more appropriately record information on conditions surrounding a shovel and information on the conditions of the shovel corresponding to the occurrence of an accident, the occurrence of a theft, or the like of the shovel is provided. The shovel 100 according to an embodiment of the present disclosure includes the recording part 3008 configured to record event occurrence log information in the storage part 3010. The event occurrence log information includes at least one of information on conditions surrounding the shovel 100 and information on the conditions of the shovel 100 at each of a time before, the time of, and a time after the occurrence of a predetermined event where at least one of the safety and the security of the shovel 100 is relatively reduced.

## Description

### TECHNICAL FIELD

The present disclosure relates to shovels.

### BACKGROUND ART

There is a demand for recording information on conditions surrounding a shovel and information on the conditions of the shovel to investigate an accident or theft of the shovel at the time of its occurrence.

For example, Patent Document 1 discloses a work machine that stores, in a storage, an image captured by a camera selected according to its motion among multiple cameras that can capture images in respective different directions.

### PRIOR ART DOCUMENT

### PATENT DOCUMENT

Patent Document 1: Japanese Unexamined Patent Publication No. 2018-053537

### SUMMARY OF THE INVENTION

### PROBLEMS TO BE SOLVED BY THE INVENTION

According to the above-described technique, however, the recording of information starts after the occurrence of an event (for example, the movement of a swing structure). Therefore, while it is possible to record information immediately after the occurrence of the event, it may be impossible to record information immediately before the occurrence of the event or information at the occurrence of the event.

Therefore, in view of the above-described problem, an object is to provide a technique that makes it possible to more appropriately record information on conditions surrounding a shovel and information on the conditions of the shovel corresponding to the occurrence of an accident, the occurrence of a theft, or the like of the shovel.

### MEANS FOR SOLVING THE PROBLEMS

To achieve the above-described object, according to an embodiment of the present disclosure,
a shovel including a recording part configured to record log information in a storage part, the log information including at least one of information on conditions surrounding the shovel and information on the conditions of the shovel at each of a time before, the time of, and a time after the occurrence of a predetermined event where at least one of the safety and the security of the shovel is relatively reduced, is provided.

According to another embodiment of the present disclosure, an information processing apparatus configured to cause a shovel to record, or transmit to a predetermined external apparatus, log information including at least one of information on conditions surrounding the shovel and information on the conditions of the shovel at each of a time before, the time of, and a time after the occurrence of a predetermined event where at least one of the safety and the security of the shovel is relatively reduced is provided.

### EFFECTS OF THE INVENTION

According to the above-described embodiments, it is possible to provide a technique that makes it possible to more appropriately record information on conditions surrounding a shovel and information on the conditions of the shovel corresponding to the occurrence of an accident, the occurrence of a theft, or the like of the shovel.

### BRIEF DESCRIPTION OF THE DRAWINGS

FIG. 1 is a schematic diagram illustrating an example of a shovel management system.
FIG. 2 is a top plan view of a shovel.
FIG. 3 is a block diagram illustrating an example configuration of the shovel management system.
FIG. 4 is a diagram illustrating an example of the imaging range of a camera and an example of the infrared radiation irradiation range of a sensor.
FIG. 5A is a diagram illustrating a first example of event occurrence log related information (an example of extracted event occurrence log history information) displayed on a display device.
FIG. 5B is a diagram illustrating a second example of the event occurrence log related information (an example of event occurrence log statistical information) displayed on the display device.
FIG. 5C is a diagram illustrating a third example of the event occurrence log related information (another example of the event occurrence log statistical information) displayed on the display device.
FIG. 6A is a diagram illustrating an example of an event occurrence log related information obtaining operation screen displayed on the display device.
FIG. 6B is a diagram illustrating another example of the event occurrence log related information obtaining operation screen displayed on the display device.

### EMBODIMENT OF THE INVENTION

An embodiment is described below with reference to the drawings.

### [Overview of Shovel Management System]

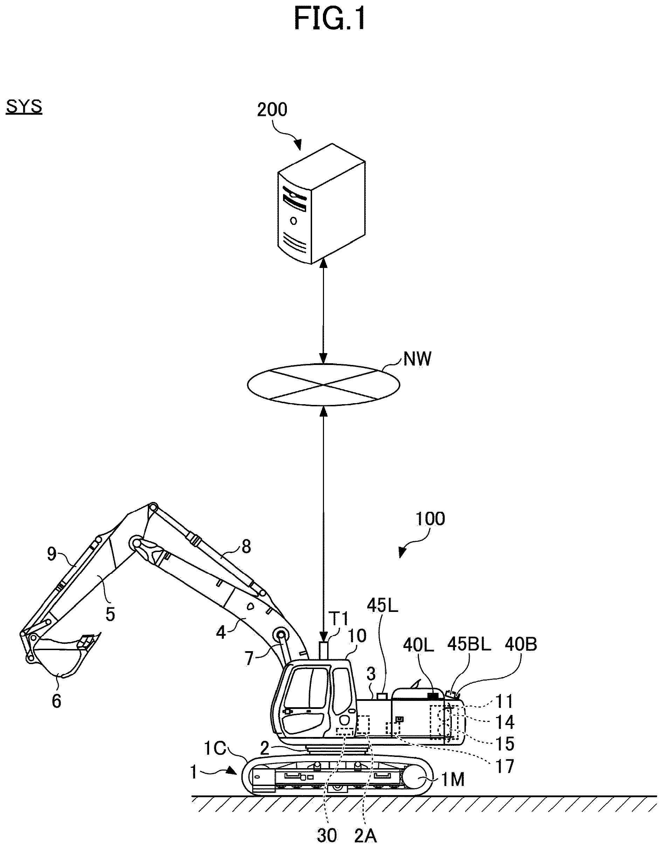

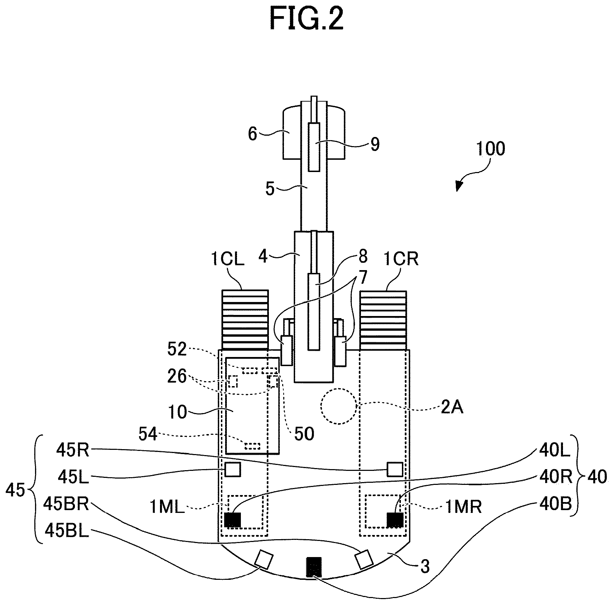

First, an overview of a shovel management system SYS according to this embodiment is given with reference to FIGS. 1 and 2.

FIG. 1 is a schematic diagram illustrating an example of the shovel management system SYS according to this embodiment. FIG. 2 is a top plan view illustrating an example of a shovel 100 according to this embodiment.

As illustrated in FIG. 1, the shovel management system SYS includes the shovel 100 and a management apparatus 200.

### <Shovel Overview>

As illustrated in FIGS. 1 and 2, the shovel 100 according to this embodiment includes a lower traveling structure 1; an upper swing structure 3 swingably mounted on the lower traveling structure 1 via a swing mechanism 2; a boom 4, an arm 5, and a bucket 6 that constitute an attachment (work implement); and a cabin 10.

The lower traveling structure 1 includes a pair of left and right crawlers 1C (left crawler 1CL and right crawler 1CR) that are hydraulically driven by travel hydraulic motors 1M (travel hydraulic motors 1ML and 1MR) to cause the shovel 100 to travel.

The upper swing structure 3 is driven by a swing hydraulic motor 2A to swing relative to the lower traveling structure 1.

The boom 4 is attached to the front center of the upper swing structure 3 in such a manner as to be able to rise and lower. The arm 5 is attached to the distal end of the boom 4 in such a manner as to be able to pivot upward and downward. The bucket 6 serving as an end attachment is attached to the distal end of the arm 5 in such a manner as to be able to pivot upward and downward. The boom 4, the arm 5, and the bucket 6 are hydraulically driven by a boom cylinder 7, an arm cylinder 8, and a bucket cylinder 9 serving as hydraulic actuators, respectively. The bucket 6 is an example of the end attachment, and other end attachments such as a slope bucket, a dredging bucket, and a breaker may also be attached to the distal end of the arm 5 in place of the bucket 6 according to the details of work, etc.

At least one of the lower traveling structure 1, the upper swing structure 3, the boom 4, the arm 5, the bucket 6, etc., may be driven by an electric actuator instead of a hydraulic actuator. For example, the upper swing structure 3 may be electrically driven by an electric motor instead of the swing hydraulic motor 2A. Hereinafter, a hydraulic actuator and an electric actuator may be collectively referred to as "actuator." Furthermore, the lower traveling structure 1 (the crawlers 1CL and 1CR), the upper swing structure 3, the boom 4, the arm 5, the bucket 6, etc., may be collectively referred to as "driven bodies."

The cabin 10 is a cab in which an operator rides, and is mounted on the front left of the upper swing structure 3.

Furthermore, the shovel 100 according to this embodiment includes a communications device T1 to be connected to the management apparatus 200 in such a manner as to be able to perform communications with the management apparatus 200 through a predetermined communication line NW. Examples of predetermined communication lines may include a mobile communication network including a base station as a terminal end, a satellite communication network using a communications satellite, and the Internet. Furthermore, the communication line NW may also be a radio communication line based on a short-range wireless communication standard such as Bluetooth (registered trademark) or Wi-Fi. This enables the shovel 100 to transmit (upload) information obtained in the shovel 100 to the management apparatus 200.

### <Overview of Management Apparatus>

The management apparatus 200 (an example of an information processing apparatus) is connected to the shovel 100 in such a manner as to be able to perform communications with the shovel 100 through the predetermined communication line NW, and manages the conditions, operation, etc., of the shovel 100 based on various kinds of information received from the shovel 100.

The management apparatus 200 is, for example, a computer (for example, a cloud server) installed in a management center outside a worksite of the shovel 100. Furthermore, the management apparatus 200 may also be, for example, an edge server installed at a location (for example, a wireless base station or a shelter) relatively close to the shovel 100. Furthermore, the management apparatus 200 may also be a computer terminal installed in a management office or the like within a worksite of the shovel 100. Furthermore, the management apparatus 200 may also be a portable terminal (for example, a smartphone, a tablet terminal, or a laptop computer terminal) that can be carried by a manager of the shovel 100 or the like. When the management apparatus 200 is a portable terminal, the management apparatus 200 may be brought into the shovel 100.

### [Configuration of Shovel Management System]

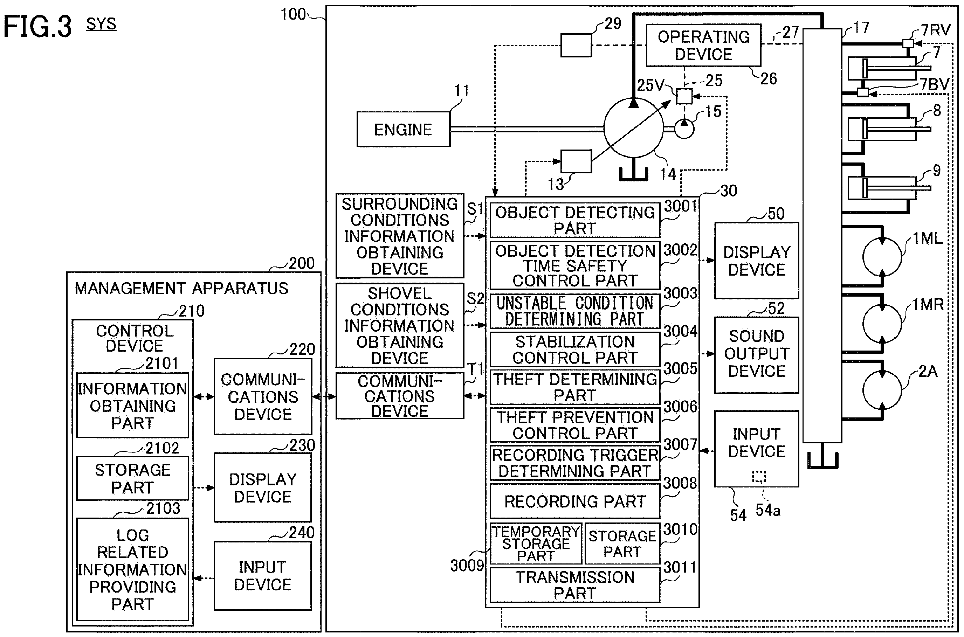

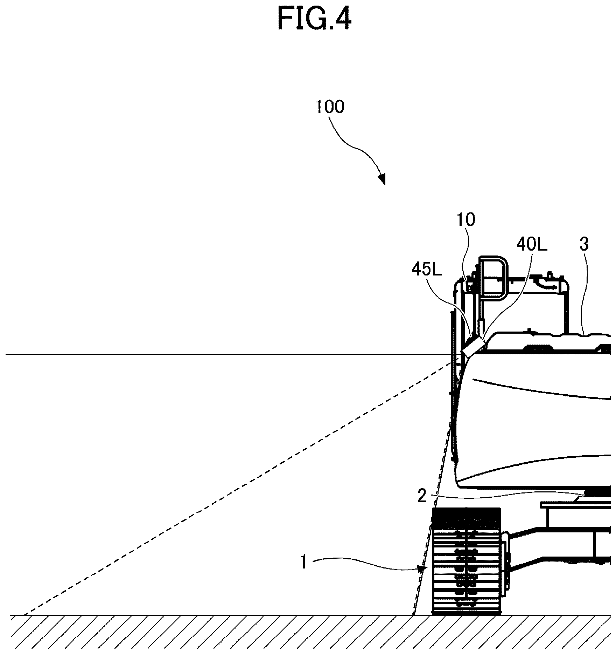

Next, a specific configuration of the shovel management system SYS according to this embodiment is described with reference to FIGS. 3 and 4 in addition to FIGS. 1 and 2.

FIG. 3 is a block diagram schematically illustrating an example configuration of the shovel management system SYS according to this embodiment. FIG. 4 is a diagram illustrating an example of the imaging range of a camera 40L and an example of the infrared radiation irradiation range of a sensor 45L.

In FIG. 3, a mechanical power line, a hydraulic oil line, a pilot line, and an electrical signal line are indicated by a double line, a thick solid line, a thin solid line, a dashed line, and a dotted line, respectively. Furthermore, in FIG. 3, a mechanical power line, a hydraulic oil line, and an electrical signal line are indicated by a double line, a solid line, and a dotted line, respectively. Furthermore, in FIG. 4, two solid lines extending from the camera 40L represent the imaging range of the camera 40L, and two dashed lines extending from the sensor 45L represent the infrared radiation irradiation range of the sensor 45X.

### <Shovel Configuration>

The hydraulic drive system of the shovel 100 according to this embodiment includes hydraulic actuators such as travel hydraulic motors 1ML and 1MR, the swing hydraulic motor 2A, the boom cylinder 7, the arm cylinder 8, and the bucket cylinder 9 as described above. Furthermore, the hydraulic drive system of the shovel 100 according to this embodiment includes a hydraulic system constituted of an engine 11, a regulator 13, a main pump 14, a control valve 17, relief valves 7BV and 7RV, etc.

The engine 11 is a main power source in the hydraulic drive system, and is, for example, a diesel engine fueled by light fuel oil. The engine 11 is, for example, mounted on the back of the upper swing structure 3, and rotates constantly at a preset target rotational speed under the direct or indirect control of a controller 30 to drive the main pump 14 and a pilot pump 15.

The regulator 13 adjusts the discharge quantity of the main pump 14. For example, the regulator 13 adjusts the angle (tilt angle) of the swash plate of the main pump 14 in response to a control command from the controller 30.

The main pump 14 is, for example, mounted on the back of the upper swing structure 3 the same as the engine 11, and supplies hydraulic oil to the control valve 17 through a high pressure hydraulic line 16. The main pump 14 is driven by the engine 11 as described above. The main pump 14 is, for example, a variable displacement hydraulic pump, and as described above, under the control of the controller 30, the tilt angle of the swash plate is adjusted by the regulator 13, so that the stroke length of the piston is adjusted and its discharge flow rate is controlled.

The control valve 17 is a hydraulic controller that is, for example, mounted in the center of the upper swing structure 3 and controls the hydraulic drive system according to the operator's operation on an operating device 26. The control valve 17 is connected to the main pump 14 via the high pressure hydraulic line 16 as described above, and selectively supplies hydraulic oil supplied from the main pump 14 to hydraulic actuators (the travel hydraulic motors 1ML and 1MR, the swing hydraulic motor 2A, the boom cylinder 7, the arm cylinder 8, and the bucket cylinder 9) according to the operating state of the operating device 26.

The relief valves 7BV and 7RV are provided in the high pressure hydraulic line between the bottom-side oil chamber of the boom cylinder 7 and the control valve 17 and in the high pressure hydraulic line between the rod-side oil chamber of the boom cylinder 7 and the control valve 17, respectively. The relief valves 7BV and 7RV discharge (release) hydraulic oil in the bottom-side oil chamber and the rod-side oil chamber, respectively, of the boom cylinder 7 to a tank in response to a control command from the controller 30. This enables the relief valves 7BV and 7RV to cause hydraulic oil in the bottom-side oil chamber or rod-side oil chamber of the boom cylinder 7 to be discharged to the tank under the control of the controller 30 to prevent an excessive increase in hydraulic pressure.

The operation system of the shovel 100 according to this embodiment includes the pilot pump 15, the operating device 26, and a hydraulic pressure control valve 25V.

The pilot pump 15 is, for example, mounted in the back of the upper swing structure 3, and supplies a pilot pressure to various kinds of hydraulic equipment such as the operating device 26 via a pilot line 25. The pilot pump 15 is, for example, a fixed displacement hydraulic pump, and is driven by the engine 11 as described above.

The operating device 26 is operation input means for the operator operating the driven bodies (the lower traveling structure 1, the upper swing structure 3, the boom 4, the arm 5, the bucket 6, etc.) of the shovel 100, provided near the operator seat of the cabin 10. In other words, the operating device 26 is operation input means for the operator operating hydraulic actuators (namely, the travel hydraulic motors 1ML and 1MR, the swing hydraulic motor 2A, the boom cylinder 7, the arm cylinder 8, the bucket cylinder 9, etc.) that drive the corresponding driven bodies.

As illustrated in FIG. 3, the operating device 26 is, for example, a hydraulic pilot type, and uses hydraulic oil supplied from the pilot pump 15 through the pilot line 25 to output a pilot pressure commensurate with the details of its operation to a secondary side pilot line 25a. The pilot line 25a is connected to the control valve 17, and the pilot pressure commensurate with the operation details of the operating device 26 is input to the control valve 17. This enables the control valve 17 to achieve the operation of a hydraulic actuator according to the details of the operator's operation on the operating device 26.

Furthermore, the operating device 26 may also be an electric type. In this case, the operating device 26 outputs an electrical signal corresponding to the details of its operation (hereinafter "operation signal"), and the operation signal is input to, for example, the controller 30. The controller 30 outputs a control command corresponding to the operation signal to a hydraulic pressure control valve (for example, a solenoid proportional valve) for operation installed in a pilot line between the pilot pump 15 and the control valve 17. According to this, a pilot pressure commensurate with the operation details of the operating device 26 is supplied from the hydraulic pressure control valve to the control valve 17. Therefore, the control valve 17 can achieve the operation of the shovel 100 according to the details of the operator's operation on the operating device 26. Furthermore, when the operating device 26 is an electric type, control valves corresponding to the hydraulic actuators provided in the control valve 17 may be electromagnetic solenoid spool valves directly driven by an operation signal from the operating device 26 (or a control command from the controller 30).

The operating device 26 includes, for example, lever devices for operating the boom 4 (the boom cylinder 7), the arm 5 (the arm cylinder 8), the bucket 6 (the bucket cylinder 9), and the upper swing structure 3 (the swing hydraulic motor 2A). Furthermore, the operating device 26 includes, for example, lever devices or pedal devices for operating the paired left and right crawlers (the travel hydraulic motors 1ML and 1MR) of the lower traveling structure 1.

The shovel 100 may be remotely controlled from a predetermined external apparatus (for example, the management apparatus 200). In this case, the controller 30 may, for example, control the above-described hydraulic pressure control valve for operation in response to an operation command received from the management apparatus 200 to cause a pilot pressure commensurate with the details of the operation command to the control valve 17. This enables the control valve 17 to achieve the operation of the shovel 100 according to the details of an operation performed by an operator who performs remote control at the management apparatus 200 (hereinafter "remote operator").

The hydraulic pressure control valve 25V is provided in the pilot line between the pilot pump 15 and the operating device 26. The hydraulic pressure control valve 25V, for example, reduces the pilot pressure of the pilot line 25 or closes the pilot line 25 in response to a control command from the controller 30. This enables the hydraulic pressure control valve 25V to reduce a pilot pressure supplied to the operating device 26 or prevent a pilot pressure from being supplied to the operating device 26. Therefore, under the control of the controller 30, the hydraulic pressure control valve 25V can restrict the movement of a hydraulic actuator by reducing a pilot pressure applied to a pilot port of the control valve 17 according to the amount of operation of the operating device 26 or preventing the pilot pressure from being applied to a pilot port of the control valve 17.

In place of the hydraulic pressure control valve 25V, a hydraulic pressure control valve that reduces the pilot pressure of the pilot line 27 between the operating device 26 and the control valve 17 or closes the pilot line 25 may be provided in the pilot line 27.

The control system of the shovel 100 according to this embodiment includes the relief valves 7BV and 7RV, the hydraulic pressure control valve 25V, an operating pressure sensor 29, the controller 30, a display device 50, a sound output device 52, an input device 54, a surrounding conditions information obtaining device S1, a shovel conditions information obtaining device S2, and the communications device Tl.

The operating pressure sensor 29 detects a secondary side pilot pressure (operating pressure) commensurate with the operation details of the operating device 26. The output of the operating pressure sensor 29 is fed into the controller 30. This enables the controller 30 to obtain the operation details of the operating device 26.

When the operating device 26 is an electric type, the operating pressure sensor 29 is omitted.

The controller 30 is, for example, provided in the cabin 10, and performs various kinds of control on the shovel 100. Functions of the controller 30 may be implemented by desired hardware, a desired combination of hardware and software, or the like. For example, the controller 30 is constituted mainly of a computer including a CPU (Central Processing Unit), a memory such as a RAM (Random Access Memory), a nonvolatile secondary storage such as a ROM (Read Only Memory), and an interface unit associated with various inputs and outputs. As functional parts implemented by loading various programs installed in the secondary storage into the memory and running the programs on the CPU, the controller 30 includes, for example, an object detecting part 3001, an object detection time safety control part 3002, an unstable condition determining part 3003, a stabilization control part 3004, a theft determining part 3005, a theft prevention control part 3006, a recording trigger determining part 3007, a recording part 3008, and a transmission part 3011. Furthermore, the controller 30 uses a temporary storage part 3009 and a storage part 3010. The temporary storage part 3009, the storage part 3010, etc., may be implemented by an internal storage of the controller 30 or an external storage that can communicate with the controller 30.

The display device 50 is provided at such a location as to be easily viewable from the seated operator in the cabin 10, and displays various information images under the control of the controller 30. The display device 50 is, for example, a liquid crystal display, an organic EL (Electroluminescence) display, or the like.

The display device 50, for example, displays an image representing a situation in the surroundings of (the area surrounding) the shovel 100 (hereinafter "surroundings image") based on an image captured by an image capturing device 40 as described below. The surroundings image may be either the very image captured by the image capturing device 40 or a viewpoint change image generated from the image captured by the image capturing device 40 (for example, an overhead view image of the surroundings as seen from above the shovel 100).

The sound output device 52 is provided in the cabin 10, and outputs a sound under the control of the controller 30. This enables the sound output device 52 to impart various notifications to the operator with the details of the output sound (the tone, pressure, pattern, contents, etc., of the sound). Examples of the sound output device 52 include a buzzer and a loudspeaker.

The input device 54 receives the input of an operation of a user such as the operator in the cabin 10. The input device 54 is, for example, hardware input means such as a button, a toggle, and a lever. The input device 54 may also be, for example, a combination of hardware input means such as a touchscreen installed in the display device 50 and software input means such as an operation icon or the like on an operation screen displayed on the display device 50. Furthermore, the input device 54 may include, for example, a sound input device and a gesture input device that receive a sound, gesture, etc., input from a user. The input device 54 includes a recording request operation part 54a.

The recording request operation part 54a is used to request the recording of information by the recording part 3008 as described below. In response to receiving an operation from a user, the recording request operation part 54a outputs a recording request to the controller 30.

For example, a user such as the operator operates the recording request operation part 54a when the shovel 100 has been close to having an accident or has actually had an accident. This enables the recording part 3008 to record surrounding conditions information and shovel conditions information under circumstances where the safety of the shovel 100 is relatively decreased.

Furthermore, for example, a user such as the operator operates the recording request operation part 54a when the internal data (for example, a program) of the shovel 100 are falsified or the shovel 100 is operated from the outside by hacking from the outside or the like. This enables the recording part 3008 to record shovel conditions information including the conditions of the internal data and the status of communications with the outside of the shovel 100 under circumstances where the security of the shovel 100 is relatively decreased.

The surrounding conditions information obtaining device S1 obtains information on conditions surrounding the shovel 100 (hereinafter "surrounding conditions information"). The surrounding conditions information obtained by the surrounding conditions information obtaining device S1 is fed into the controller 30.

The surrounding conditions information obtaining device S1 includes, for example, the image capturing device 40 as illustrated in FIGS. 1 and 2.

The image capturing device 40 (an example of a first information obtaining device) is attached on top of the upper swing structure 3, and captures an image of the surrounding area of the shovel 100 over an area relatively close to the shovel 100 to an area relatively remote from the shovel 100 to obtain the captured image. The image capturing device 40 includes a camera 40B, the camera 40L, and a camera 40R. Hereinafter, the cameras 40B, 40L and 40R may be collectively or any one of them may be individually referred to as "camera 40X."

The camera 40B, the camera 40L, and the camera 40R are attached to the back end, the left end, and the right end of the top of the upper swing structure 3 to capture images of an area behind, an area to the left, and an area to the right, respectively, of the upper swing structure 3. For example, the camera 40X is a monocular camera having a very wide angle of view (namely, a wide angle camera). Furthermore, for example, the camera 40X may also be a stereo camera, a distance image camera, a depth camera, or the like. The camera 40B covers an imaging range behind the upper swing structure 3, for example, an imaging range extending in a horizontal direction (namely, a circumferential direction relative to the shovel 100) from an area behind and to the left to an area behind and to the right of the upper swing structure 3. The camera 40L covers, for example, an imaging range to the left of the upper swing structure 3, for example, an imaging range extending in a horizontal direction (a circumferential direction relative to the shovel 100) from an area in front of and to the left to an area behind and to the left of the upper swing structure 3. The camera 40R covers, for example, an imaging range to the right of the upper swing structure 3, for example, an imaging range extending in a horizontal direction (a circumferential direction relative to the shovel 100) from an area in front of and to the right to an area behind and to the right of the upper swing structure 3. Furthermore, as illustrated in FIG. 4, the camera 40X is attached to the top of the upper swing structure 3 such that its optical axis points diagonally downward to cover a relatively wide vertical imaging range including an area from the ground near the shovel 100 to an area distant from the shovel 100 (an example of a range within which information is obtained).

The camera 40X, for example, outputs a captured image at predetermined intervals (for example, every 1/30 seconds) during the period from the start (namely, turning on the key switch) to the stop (namely, turning off the key switch) of the shovel 100. The captured image output from the camera 40X is fed into the controller 30.

Furthermore, the surrounding conditions information obtaining device S1 includes, for example, a nearby object information obtaining device 45 as illustrated in FIGS. 1 and 2.

The nearby object information obtaining device 45 (an example of a second information obtaining device) is attached to the top of the upper swing structure 3, and obtains information on an object in an area surrounding the shovel 100. The nearby object information obtaining device 45 includes sensors 45BL and 45BR, the sensor 45L, and a sensor 45R. Hereinafter, the sensors 45BL, 45BR, 45L and 45R may be collectively or any one of them may be individually referred to as "sensor 45X."

The sensor 45BL, the sensor 45BR, the sensor 45L, and the sensor 45R are attached to the back end to the left, the back end to the right, the left end, and the right end of the top of the upper swing structure 3 to obtain information on conditions in an area behind and to the left, an area behind and to the right, an area to the left, and an area to the right, respectively, of the upper swing structure 3. For example, the sensor 45X is a LIDAR (Light Detection and Ranging). Furthermore, for example, the sensor 45X may also be, for example, a millimeter wave radar, an ultrasonic sensor, or the like. Hereinafter, a description is given, focusing on the case where the sensor 45X is a LIDAR.

For example, by emitting infrared radiation in a certain direction and receiving reflected light (an example of a reflected signal) from an object in the direction, the sensor 45X obtains information on the object in an area surrounding the shovel 100, specifically, information on the received reflected light (hereinafter "received light information") (an example of information on a reflected signal). The sensor 45X is, for example, a LIDAR scanner, and is a three-dimensional laser scanner capable of perform scanning in the vertical and lateral radiation directions of an infrared laser. Furthermore, the sensor 45X may also be a so-called flash LIDAR that emits infrared radiation three-dimensionally over a wide range from a light-emitting module to capture an image of reflected light (infrared radiation) with a three-dimensional distance image sensor.

The received light information includes information on the time from the emission of infrared radiation to the reception of reflected light (TOF: Time Of Flight) (hereinafter "TOF information") in each emission direction of infrared radiation and information on the intensity of received reflected light (hereinafter "received light intensity information") in each emission direction of infrared radiation.

The sensor 45BL is configured to be able to emit infrared radiation over an irradiation range behind and to the left of the upper swing structure 3, for example, an irradiation range extending in a horizontal direction (namely, a circumferential direction relative to the shovel 100) from an area behind and to the left to an area behind the upper swing structure 3. The sensor 45BR is configured to be able to emit infrared radiation over an irradiation range behind and to the right of the upper swing structure 3, for example, an irradiation range extending in a horizontal direction (a circumferential direction relative to the shovel 100) from an area behind and to the right to an area behind the upper swing structure 3. The sensor 45L is configured to be able to emit infrared radiation over an irradiation range to the left of the upper swing structure 3, for example, an irradiation range extending in a horizontal direction (a circumferential direction relative to the shovel 100) from an area in front of and to the left to an area behind and to the left of the upper swing structure 3. The sensor 45R is configured to be able to emit infrared radiation over an irradiation range to the right of the upper swing structure 3, for example, an irradiation range extending from an area in front of and to the right to an area behind and to the right of the upper swing structure 3. Furthermore, as illustrated in FIG. 4, the sensor 45X is attached to the top of the upper swing structure 3 such that its optical axis (namely, its reference axis in an emission direction of infrared radiation) points diagonally downward to have a vertical infrared radiation irradiation range (an example of a range within which information is obtained) having its center on part of the ground relatively close to the shovel 100. Specifically, as illustrated in FIG. 4, the sensor 45X has an infrared radiation irradiation range smaller (narrower) than the imaging range of the camera 40X in a direction toward or away from the shovel 100, and the irradiation range is configured in such a manner as to be partly or entirely included in the imaging range of the camera 40X.

Each sensor 45X outputs received light information at predetermined intervals during the period from the start to the stop of the shovel 100. The received light information output from the sensor 45X is fed into the controller 30.

Furthermore, the surrounding conditions information obtaining device S1 includes, for example, a sound collecting microphone that collects sounds in an area surrounding the shovel 100 to obtain sound information.

Furthermore, the surrounding conditions information obtaining device S1 includes, for example, a weather conditions information obtaining device that obtains information on the ambient weather conditions of the shovel 100 (hereinafter, "weather conditions information"). The weather conditions information may include at least one of the ambient weather, temperature, wind direction, wind velocity, etc., of the shovel 100. The weather information obtaining device may also include, for example, an outside temperature sensor that measures the outside ambient temperature of the shovel 100. Furthermore, the weather information obtaining device may also include, for example, an illuminance sensor that measures illuminance associated with the ambient weather of the shovel 100. Furthermore, the weather information obtaining device may also include, for example, the communications device T1 that obtains the weather conditions information such as the weather in a worksite of the shovel 100 from a server apparatus associated with outside weather information.

The shovel conditions information obtaining device S2 obtains information on the conditions of the shovel 100 (hereinafter "shovel conditions information"). The shovel conditions information obtained by the shovel conditions information obtaining device S2 is fed into the controller 30.

The shovel conditions information obtaining device S2 includes, for example, a position information obtaining device that obtains the position information of the shovel 100.

The position information obtaining device includes, for example, a GNSS (Global Navigation Satellite System) device that determines the location of the shovel 100 based on satellite signals received from three or more overhead satellites.

The shovel conditions information obtaining device S2 includes, for example, an operation information obtaining device that obtains information on the operation state of actuators.

The operation information obtaining device includes, for example, the operating pressure sensor 29 corresponding to the operating device 26 of a hydraulic pilot type. Furthermore, the operation information obtaining device includes, for example, the operating device 26 of an electric type. Furthermore, in the case where the shovel 100 is remotely controlled, the operation information obtaining device may include the communications device T1 that obtains (receives) operation commands serving as information on the operation state of actuators from a predetermined external apparatus (for example, the management apparatus 200).

Furthermore, the shovel conditions information obtaining device S2 includes, for example, a pose information obtaining device that obtains information on the pose state of the shovel 100.

The pose information obtaining device includes, for example, a boom angle sensor that obtains information on the pose angle of the boom 4 (hereinafter "boom angle"). Furthermore, the pose information obtaining device includes, for example, an arm angle sensor that obtains information on the pose angle of the arm 5 (hereinafter "arm angle"). Furthermore, the pose information obtaining device includes, for example, a bucket angle sensor that obtains information on the pose angle of the bucket 6 (hereinafter "bucket angle"). Furthermore, the pose information obtaining device includes, for example, a machine body pose sensor that obtains information on the pose angles of the upper swing structure 3 (specifically, the tilt angles of the upper swing structure 3 in its longitudinal direction and lateral direction and the swing angle of the upper swing structure 3 about its swing axis). The boom angle sensor may be constituted of, for example, a rotary encoder, an acceleration sensor, an angular velocity sensor, a six-axis sensor, an IMU (Inertial Measurement Unit), or the like. The same may be true for the arm angle sensor, the bucket angle sensor, and the machine body pose sensor.

Furthermore, the shovel conditions information obtaining device S2 includes, for example, a motion information obtaining device that obtains information on the motion state of the shovel 100.

The motion information obtaining device includes, for example, an acceleration sensor or an angular velocity sensor that obtains information on the motion state of the lower traveling structure 1. Furthermore, the motion information obtaining device includes, for example, an acceleration sensor, an angular velocity sensor, or the like that obtains information on the motion state of the upper swing structure 3. Furthermore, the motion information obtaining device includes, for example, an acceleration sensor, an angular velocity sensor, or the like that obtains information on the motion state of the boom 4. Furthermore, the motion information obtaining device includes, for example, an acceleration sensor, an angular velocity sensor, or the like that obtains information on the motion state of the arm 5. Furthermore, the motion information obtaining device includes, for example, an acceleration sensor, an angular velocity sensor, or the like that obtains information on the motion state of the bucket 6. Furthermore, the motion information obtaining device includes, for example, hydraulic pressure sensors (port pressure sensors), rotational speed sensors or the like that obtain information on the respective motion states of the travel hydraulic motors 1ML and 1MR. Furthermore, the motion information obtaining device includes, for example, a hydraulic pressure sensor (port pressure sensor), a rotational speed sensor or the like that obtains information on the motion state of the swing hydraulic motor 2A. Furthermore, the motion information obtaining device includes, for example, a hydraulic pressure sensor (cylinder pressure sensor), a cylinder position sensor or the like that obtains information on the motion state of the boom cylinder 7. Furthermore, the motion information obtaining device includes, for example, a hydraulic pressure sensor (cylinder pressure sensor), a cylinder position sensor or the like that obtains information on the motion state of the arm cylinder 8. Furthermore, the motion information obtaining device includes, for example, a hydraulic pressure sensor (cylinder pressure sensor), a cylinder position sensor or the like that obtains information on the motion state of the bucket cylinder 9.

Furthermore, the shovel conditions information obtaining device S2 includes, for example, a hydraulic drive system information obtaining device that obtains information on the condition of the hydraulic drive system of the shovel 100.

The hydraulic drive system information obtaining device includes, for example, an engine rotational speed sensor that obtains information on the rotational speed of the engine 11. Furthermore, the hydraulic drive system information obtaining device includes, for example, a discharge pressure sensor that detects the discharge pressure of the main pump 14. Furthermore, the hydraulic drive system information obtaining device includes, for example, a negative control pressure sensor that obtains information on a hydraulic pressure (hereinafter "negative control pressure") that is generated at a negative control throttle (hereinafter "negative control throttle") provided most downstream in a hydraulic system from the main pump 14 through the control valve 17 to the hydraulic oil tank.

In the case where at least one of the driven bodies is electrically driven, the shovel conditions information obtaining device S2 may include, for example, an electric drive system obtaining device that obtains information on the condition of the electric drive system of the shovel 100. The electric drive system of the shovel 100 includes, for example, a power supply (for example, an electrical energy storage device such as a lithium ion capacitor, a generator, or the like) and drivers (for example, an inverter, a converter, etc.) for driving an electric actuator. The electric drive system information obtaining device may include, for example, sensors that detect the electric current, voltage, etc., of the power supply and sensors that detect the output voltage, output current, etc., of the drivers.

Furthermore, the shovel conditions information obtaining device S2 includes, for example, an indoor conditions information obtaining device that obtains information representing the indoor conditions of the cabin 10 of the shovel.

The indoor conditions information obtaining device includes, for example, an indoor camera that captures an image of the inside of the cabin 10 to obtain image information representing a situation inside the cabin 10. Furthermore, the indoor conditions information obtaining device includes, for example, a line-of-sight sensor that detects the line of sight of a user such as the operator inside the cabin 10. Furthermore, the indoor conditions information obtaining device includes, for example, a biometric sensor that obtains the biological information such as brain waves and pulses of a user such as the operator inside the cabin 10.

The communications device T1 performs communications with an external apparatus (for example, the management apparatus 200) through the communication line NW. The communications device T1 is, for example, a mobile communication module that connects to a mobile communication network including a base station as a terminal end. The communications device T1 may also be, for example, a satellite communication module that connects to a satellite communication network using a communications satellite. The communications device T1 may also be, for example, a Wi-Fi communication module or a Bluetooth communication module that performs short-range communications.

The object detecting part 3001 detects an object that is a monitoring target (hereinafter, simply "monitoring target") within a nearby monitoring area around the shovel 100 based on the surrounding conditions information obtained by the surrounding conditions information obtaining device S1. Examples of monitoring targets include persons such as a worker working around the shovel 100 and a supervisor of a worksite. Furthermore, examples of monitoring targets may include any obstacles other than persons, such as stationary, immovable obstacles such as materials temporarily placed in a worksite and a makeshift office in a worksite and moving obstacles such as vehicles including trucks.

The object detecting part 3001, for example, detects a monitoring target in a predetermined monitoring area (hereinafter "first monitoring area" for convenience) around the shovel 100 (the upper swing structure 3) based on the output of the image capturing device 40, namely, a captured image captured by the image capturing device 40.

The object detecting part 3001 may detect a monitoring target within the first monitoring area that extends in a horizontal direction as seen from the shovel 100 (hereinafter, simply "horizontal direction"), namely, a direction along a plane (hereinafter "work plane") in which the shovel 100 is working (the lower traveling structure 1 is in contact with the ground). Specifically, the object detecting part 3001 may detect a monitoring target within the first monitoring area where a horizontal distance D from the shovel 100 (the upper swing structure 3) is less than or equal to a predetermined distance Dth1 (for example, five meters).

For example, the object detecting part 3001 recognizes a monitoring target in a captured image by applying known various image processing techniques, a discriminator based on machine learning including artificial intelligence (AI), etc., as desired.

Furthermore, the object detecting part 3001 determines (estimates) a position at which a recognized monitoring target (person) in an image captured by the monocular image capturing device 40 is present (for example, a foot position) (hereinafter "actual position") by applying known various techniques.

For example, the object detecting part 3001 estimates a horizontal distance as seen from the shovel 100 (hereinafter "horizontal distance") based on the size of a recognized monitoring target in a captured image (for example, the vertical size in a captured image). This is because there is such a correlation that the size of a recognized monitoring target in a captured image decreases as the distance of the monitoring target from the shovel 100 increases. Specifically, because a monitoring target has an expected size range (for example, an expected human height range), the correlation between the horizontal distance of the monitoring target included in the expected size range from the shovel 100 and the size in a captured image can be predetermined. Therefore, the object detecting part 3001 can estimate the horizontal distance of a monitoring target from the shovel 100 based on, for example, a map, a conversion formula, or the like that represents the correlation between the size of the monitoring target in a captured image and the horizontal distance as seen from the shovel 100 prestored in the internal memory of the controller 30, such as a secondary storage. Furthermore, the object detecting part 3001 can estimate a direction in which a monitoring target is present as seen from the shovel 100 (the camera 40X) according to the lateral direction (right-to-left direction) in a captured image.

Furthermore, for example, the object detecting part 3001 can estimate the actual position (for example, foot position) of a monitoring target through the projective transformation (homography) of a captured image onto a plane, or the like, based on the assumption that the monitoring target exists in the same plane as the shovel 100 (specifically, the lower traveling structure 1). In this case, a part (point) of the captured image is correlated with a corresponding position in the same plane as the shovel 100.

Furthermore, the object detecting part 3001 may detect a monitoring target in such a manner as to distinguish the type of the monitoring target (for example, to distinguish between a person and an obstacle other than a person) based on the output of the image capturing device 40 (the camera 40X) when multiple types of monitoring targets are predetermined.

For example, the object detecting part 3001 detects a monitoring target in such a manner as to distinguish the type of the monitoring target based on an image captured by the image capturing device 40 (the camera 40X) using a technique to apply a different discriminator to each type of monitoring target, or the like.

Furthermore, for example, the object detecting part 3001 detects a monitoring target around the shovel 100 from an image captured by the image capturing device 40 (the camera 40X) using a trained model constructed mainly of a neural network.

The neural network is a so-called deep neural network including one or more intermediate layers (hidden layers) between an input layer and an output layer. According to the neural network, a weight parameter that represents the strength of connection with a lower layer is defined with respect to each of the neurons of each intermediate layer. The neural network is configured such that a neuron of each layer outputs the sum of the values obtained by multiplying input values from the upper-layer neurons by their respective defined weight parameters to lower-layer neurons through a threshold function.

Machine learning, specifically, deep learning, is performed on the neural network to optimize the above-described weight parameters. As a result, an image captured by the image capturing device 40 (the camera 40X) is input to the neural network as an input signal x, and the neural network can output the probability (predicted probability) of the presence of a monitoring object with respect to each predetermined type of monitoring object as an output signal y. Therefore, the object detecting part 3001 can detect a monitoring target in such a manner as to distinguish the type of the monitoring target based on the predicted probability of each monitoring target.

The neural network is, for example, a convolutional neural network (CNN). The CNN is a neural network to which existing image processing techniques (convolution and pooling) are applied. Specifically, the CNN repeats a combination of convolution and pooling on an image captured by the image capturing device 40 (the camera 40X) to extract feature data (a feature map) smaller in size than the captured image. The pixel value of each pixel of the extracted feature map is input to a neural network constituted of fully connected layers, and the output layer of the neural network can output, for example, the predicted probability of the presence of an object (a monitoring target) with respect to each type of object.

Furthermore, the neural network may also be configured such that an image captured by the image capturing device 40 (the camera 40X) is input as the input signal x and the position and the size of an object in the captured image (namely, an area occupied by the object in the captured image) and the type of the object can be output as the output signal y. That is, the neural network may be configured to detect an object in a captured image (determine a part of the captured image that is an area occupied by the object) and determine the classification of the object. Furthermore, in this case, the output signal y may be configured in the format of image data in which the occupied area of the object and information on its classification are added to the captured image serving as the input signal x in a superimposed manner. This enables the object detecting part 3001 to identify, based on the position and size of the occupied area of an object in a captured image output from a trained model (the neural network), the relative position (distance and direction) of the object from the shovel 100. This is because the camera 40X is fixed to the upper swing structure 3 and its imaging range (angle of view) is predefined (prefixed). The object detecting part 3001 can determine the detection of a monitoring target object within a monitoring area when the position of the object detected by a trained model (the neural network) is within the monitoring area (first monitoring area) and the detected object is classified as a monitoring target.

For example, the neural network may be configured to include individual neural networks corresponding to the process of extracting an occupied area (window) in which an object is present in a captured image and the process of identifying the type of the object in the extracted area. That is, the neural network may be configured to perform the detection of an object and the classification of the object in a stepwise manner. Furthermore, for example, the neural network may be configured to include individual neural networks corresponding to the process of defining the classification of an object and the occupied area (Bounding box) of the object with respect to each of grid cells that are a predetermined number of partial areas into which the entire area of a captured image is divided and the process of combining the occupied areas of the object with respect to each type based on the classification of the object with respect to each grid cell and finalizing the occupied area of the object. That is, the neural network may be configured to perform the detection of an object and the classification of the object in parallel.

The object detecting part 3001, for example, calculates a predicted probability with respect to each type of object in a captured image at predetermined control intervals. In calculating a predicted probability, when the determination result of this time matches the determination result of the last time, the object detecting part 3001 may increase the predicted probability of this time. For example, when an object seen in a predetermined area of a captured image determined to be a "person" in the last object detection process continues to be determined to be a "person" this time, the predicted probability of being determined to be a "person" this time may be made higher than the predicted probability of the last time. As a result, for example, when the results of a determination as to the classification of an object with respect to the same image area continuously match, the predicted probability is calculated to be higher. Therefore, the object detecting part 3001 can reduce erroneous determinations such as a determination in which the predicted probability of a type of object is made lower because of some noise although an object of the type is actually present.

Furthermore, the object detecting part 3001 may perform a determination as to an object in a captured image in view of a motion of the shovel 100, such as traveling or swinging. This is because although an object around the shovel 100 is stationary, the position of the object in a captured image moves as the shovel 100 travels or swings and the object may become unable to be recognized as the same object. For example, because of the traveling or swinging of the shovel 100, an image area determined to be a "person" in the process of this time may be different from an image area determined to be a "person" in the process of the last time. In this case, if the image area determined to be a "person" in the process of this time is within a predetermined area from the image area determined to be a "person" in the process of the last time, the object detecting part 3001 may reckon the image areas as the same object and continuously determine a match (that is, determine that the same object continues to be detected). In the case of continuously determining a match, the object detecting part 3001 may include, in addition to the image area used in the last determination, an image area within a predetermined area from this image area in an image area used in the determination of this time. This enables the object detecting part 3001 to continuously determine a match with respect to the same object around the shovel 100 even when the shovel 100 travels or swings.

Furthermore, the object detecting part 3001, for example, detects a monitoring target in a predetermined monitoring area (hereinafter "second monitoring area" for convenience) around the shovel 100 (the upper swing structure 3) based on the output of the nearby object information obtaining device 45 (namely, the received light information).

The object detecting part 3001 may detect a monitoring target within the second monitoring area that extends in the horizontal direction, namely, a direction along the work plane. Specifically, the object detecting part 3001 may detect a monitoring target within the second monitoring area where the horizontal distance D from the shovel 100 (the upper swing structure 3) is less than or equal to a predetermined distance Dth2. The predetermined distances Dth1 and Dth2 may be either the same or different. That is, the first monitoring area and the second monitoring area may be either the same or different. For example, the first monitoring area may include an area relatively distant from the shovel 100 and the second monitoring area may be limited to an area closer to the shovel 100 than is the first monitoring area.

For example, the object detecting part 3001 determines the presence and the position of a nearby object based on TOF information in the received light information fed from the nearby object information obtaining device 45. Furthermore, the object detecting part 3001 may identify the type of a nearby object and determine whether the object corresponds to a monitoring target by determining the shape of the object, the size of the object, etc., based on received light information (TOF information) corresponding to received reflected lights from multiple emittance directions. Furthermore, the object detecting part 3001 may also identify the type of a nearby object and determine whether the object corresponds to a monitoring target by determining the retroreflectivity and the reflectance of the nearby object based on received light intensity information in the received light information.

Furthermore, for example, the same as in the case based on an image captured by the image capturing device 40, the object detecting part 3001 detects a monitoring target around the shovel 100 from the received light information of the nearby object information obtaining device 45, using a trained model constructed mainly of a neural network.

As described above, the imaging range of the camera 40X is relatively large (wide) in a direction toward or away from the shovel 100. Therefore, the object detecting part 3001 can detect a monitoring target in a relatively wide range by using the output (an image captured by) the camera 40X. In contrast, the infrared radiation irradiation range of the sensor 45X, namely, a range from which reflected light is receivable in an area surrounding the shovel 100, is relatively small (narrow) in a direction toward or away from the shovel 100. Therefore, the sensor 45X can obtain received light information of higher resolution. Accordingly, the object detecting part 3001 can detect a monitoring target with higher accuracy based on the output (received light information) of the sensor 45X. That is, the sensor 45X can output information with higher reliability with respect to the detection of a monitoring target.

Furthermore, functions of the object detecting part 3001 may be switched between ON (being enabled) and OFF (being disabled) according to a predetermined operation on the input device 54 performed by a user such as the operator. In this case, the ON (being enabled) and OFF (being disabled) may be switched with respect to each of the function of detecting a monitoring target based on the output of the image capturing device 40 and the function of detecting a monitoring target based on the output of the nearby object information obtaining device 45.

The object detection time safety control part 3002 performs control with respect to a safety function (hereinafter "first safety function" for convenience) and activates the first safety function when the object detecting part 3001 detects a monitoring target within a monitoring area.

The first safety function may include, for example, a notification function to notify the operator or the like in the cabin 10 or a worker, etc., around the shovel 100 of the detection of a monitoring target by outputting an alarm to at least one of the inside and the outside of the cabin 10. Hereinafter, the notification function for the inside of the cabin 10, namely, the operator or the like, and the notification function for the outside of the cabin 10, namely, a worker, etc., around the shovel 100, may be distinguished by being referred to as "internal notification function" and "external notification function," respectively.

The object detection time safety control part 3002 activates the notification function when the object detecting part 3001 detects a monitoring target in a predetermined area (hereinafter "notification area") included in the monitoring area. The notification area may be equal to the monitoring area or may be set such that its outer edge is closer to the shovel 100 than is that of the monitoring area. This makes it possible to alert the operator inside the cabin 10 and a worker, etc., around the shovel 100 to the presence of a monitoring target within a predetermined area around the shovel 100.

The object detection time safety control part 3002, for example, activates a sound (namely, auditory) notification function with respect to the detection of a monitoring target for at least one of the inside and the outside of the cabin 10 by controlling the sound output device 52. In this case, the object detection time safety control part 3002 may change the pitch, pressure, and tone of an output sound, emission intervals in the case of periodically emitting a sound, the contents of a sound, etc., according to various conditions.

Furthermore, the object detection time safety control part 3002, for example, activates a display (namely, visual) notification function with respect to the detection of a monitoring target for the inside the cabin 10 by controlling the display device 50. Specifically, the object detection time safety control part 3002 may display an image that represents the detection of a monitoring target on a surroundings image displayed on the display device 50. Furthermore, the object detection time safety control part 3002 may highlight a position corresponding to a monitoring target in a surroundings image displayed on the display device 50 and a position corresponding to the position of a detected monitoring target as seen from the shovel 100 in the surroundings image. More specifically, the object detection time safety control part 3002 may display a frame enclosing the monitoring target in the surroundings image over the surroundings image and may display a marker over a position in the surroundings image corresponding to the actual position of the detected monitoring target. This enables the display device 50 to achieve a visual notification function for the operator.

Furthermore, the object detection time safety control part 3002, for example, may activate a visual notification function with respect to the detection of a monitoring target for a worker, a supervisor, etc., around the shovel 100 by controlling a headlight or an external display device provided in the house or the like of the upper swing structure 3. Furthermore, the object detection time safety control part 3002, for example, may activate a tactile notification function for the operator inside the cabin 10 by controlling a vibration generator that vibrates an operator seat where the operator sits. This enables the controller 30 to cause the operator and a worker, a supervisor, etc., around the shovel 100 to be aware of the presence of a monitoring target (for example, a person such as a worker) around the shovel 100. Therefore, the controller 30 can encourage the operator to check a safety situation in an area surrounding the shovel 100 and encourage a worker, etc., within the monitoring area to leave the monitoring area.

Furthermore, the object detection time safety control part 3002 may change the form of notification (namely, the manner of notification) according to the positional relationship between a monitoring target detected within the notification area and the shovel 100.

For example, when a monitoring target detected within the notification area by the object detecting part 3001 is present at a position relatively distant from the shovel 100, the object detection time safety control part 3002 may output a warning of relatively low emergency that remains at the level of encouraging the operator or the like to pay attention to the monitoring target (hereinafter "advisory level warning"). Hereinafter, an area relatively distant from the shovel 100, namely, an area corresponding to the advisory level warning, in the notification area may be referred to as "advisory notification area" for convenience. In contrast, when a monitoring target detected within the notification area by the object detecting part 3001 is present at a position relatively close to the shovel 100, the object detection time safety control part 3002 may output a warning of relatively high emergency that indicates an increase in the level of risk due to the approach of the monitoring target to the shovel 100 (hereinafter "alert level warning"). Hereinafter, an area relatively close to the shovel 100, namely, an area corresponding to the alert level warning, in the notification area may be referred to as "alert notification area" for convenience.

In this case, the object detection time safety control part 3002 may cause the pitch, pressure, tone, emittance intervals, etc., of the output sound of the sound output device 52 to differ between the advisory level warning and the alert level warning. Furthermore, the object detection time safety control part 3002 may cause the color, shape, size, presence or absence of blinking, blinking intervals, etc., of an image representing the detection of a monitoring target or an image highlighting a monitoring target or the position of a monitoring target (for example, a frame, a marker, or the like) displayed over a surroundings image on the display device 50 to differ between the advisory level warning and the alert level warning. This enables the controller 30 to cause the operator to be aware of the degree of emergency, in other words, the degree of closeness of a monitoring target to the shovel 100, through a difference in a notification sound (a warning sound) output from the sound output device 52 or a notification image displayed on the display device 50.

The object detection time safety control part 3002 may stop the notification function when a monitoring target detected by the object detecting part 3001 is no longer detected within the monitoring area or when a predetermined operation to deactivate the notification function is accepted through the input device 54 after the activation of the notification function.

Furthermore, the first safety function may include, for example, a motion restriction function to restrict the motion of the shovel 100 responsive to an actuator operation (for example, an operation or remote control on the operating device 26). The motion restriction function includes at least one of a motion deceleration function to cause the shovel 100 to move slower than usual in response to an actuator operation and a motion stop function to stop the motion of the shovel 100 and keep the shovel 100 stationary regardless of an actuator operation.

The object detection time safety control part 3002, for example, activates the motion restriction function when the object detecting part 3001 detects a monitoring target within a predetermined area (hereinafter "motion restriction area") included in the monitoring area. The motion restriction area may be equal to the monitoring area or may be set such that its outer edge is closer to the shovel 100 than is that of the monitoring area. Furthermore, the motion restriction area includes at least one of a motion deceleration area where the shovel 100 is caused to move slower than usual in response to an actuator operation and a motion stop area where the motion of the shovel 100 is stopped and the shovel 100 is kept stationary regardless of an actuator operation. For example, when the motion restriction area includes both of the motion deceleration area and the motion stop area, the motion stop area is, for example, an area adjacent to the shovel 100 in the motion restriction area, and the motion deceleration area is an area set outside the motion stop area in the motion restriction area.

The object detection time safety control part 3002, for example, activates the motion restriction function to restrict the motion of the shovel 100 by controlling the hydraulic pressure control valve 25V. In this case, the object detection time safety control part 3002 may either restrict the motion of all driven bodies (namely, all actuators) or restrict the motion of one or some driven bodies (namely, one or some corresponding hydraulic actuators). This enables the controller 30 to decelerate or stop the motion of the shovel 100 when a monitoring target is present around the shovel 100. Therefore, the controller 30 can prevent contact between the shovel 100 and a monitoring target around the shovel 100.

Furthermore, the object detection time safety control part 3002 stops the motion restriction function when a monitoring target detected by the object detecting part 3001 is no longer detected or when a predetermined operation to deactivate the motion restriction is accepted through the input device 54 after the activation of the motion restriction function. The operation for deactivating the notification function and the operation for deactivating the motion restriction function on the input device 54 may be either the same or different.

Furthermore, the object detection time safety control part 3002 may cause the mode of control regarding the safety function to differ between when a monitoring target is detected based on the output of (an image captured by) the image capturing device 40 and when a monitoring target is detected based on the output of the nearby object information obtaining device 45.

For example, when the object detecting part 3001 detects a monitoring target from the output of the image capturing device 40, the object detection time safety control part 3002 activates only the notification function of the safety function. That is, when the object detecting part 3001 detects a monitoring target from the output of the image capturing device 40, the object detection time safety control part 3002 does not activate the motion restriction function regardless of the distance between the monitoring target and the shovel 100, etc. Specifically, the object detection time safety control part 3002 activates the notification function when the object detecting part 3001 detects a monitoring target within the notification area (hereinafter "first notification area" for convenience) from an image captured by the image capturing device 40. A motion restriction area corresponding to the detection of a monitoring target from an image captured by the image capturing device 40 (hereinafter "first motion restriction area") is not set.

On the other hand, the object detection time safety control part 3002 activates the motion restriction function when the object detecting part 3001 detects a monitoring target within the motion restriction function (hereinafter "second motion restriction function" for convenience) from the output of the nearby object information obtaining device 45. Furthermore, the object detection time safety control part 3002 may activate the notification function when the object detecting part 3001 detects a monitoring target within the notification area (hereinafter "second notification area" for convenience) from the output of the nearby object information obtaining device 45. The first notification area and the second notification area may be either the same or different.

For example, if the motion restriction function is activated based on the result of detection with respect to a monitoring target although the accuracy of the detection is relatively low, it is more likely that the operator has a feeling of strangeness and that the work efficiency of the shovel 100 decreases than in the case where the notification function is activated.

In contrast, according to this example, the controller 30 allows the activation of the motion restriction function only when a monitoring target is detected from the output of the nearby object information obtaining device 45 in the image capturing device 40 and the nearby object information obtaining device 45. This is because the detection accuracy tends to be higher in the case where a monitoring target is detected from the received light information of the nearby object information obtaining device 45 than in the case where a monitoring target is detected through image recognition on an image captured by the image capturing device 40. This enables the controller 30 to increase the safety of the shovel 100 while preventing the operator from having a feeling of strangeness and preventing a decrease in the work efficiency of the shovel 100.

The unstable condition determining part 3003 determines whether the stability of the shovel 100 is below a predetermined reference level. That is, the unstable condition determining part 3003 determines whether the shovel 100 is in an unstable condition based on the shovel conditions information obtained by the shovel conditions information obtaining device S2.

The unstable condition of the shovel 100 may include, for example, an unstable condition resulting from the pose state of the shovel 100, namely, the static unstable condition (hereinafter "static unstable condition") of the shovel 100. That is, the stability of the shovel 100 may include static stability corresponding to the above-described static unstable condition of the shovel 100 (hereinafter "static stability").

The static unstable condition of the shovel 100 includes, for example, a pose state where the distal end of the attachment, namely, the position of the bucket 6, is at a position relatively distant from the machine body (the lower traveling structure 1, the swing mechanism 2, the upper swing structure 3, etc.) of the shovel 100 (hereinafter "first unstable pose state"). This is because when the position of the bucket 6 is relatively significantly distant from the vehicle body, a moment in a direction to tip the shovel 100 forward that acts on the vehicle body from the attachment (hereinafter "tipping moment") relatively increases so that the shovel 100 is more likely to tip over. Furthermore, the static unstable condition of the shovel 100 includes, for example, a pose state where the distal end of the attachment, namely, the position of the bucket 6, is at a relatively high position (hereinafter "second unstable pose state"). This is because, for example, if the position of the bucket 6 is at a relatively high position when the shovel 100 starts to tip forward for some reason such as the motion of the shovel 100 or the action of an external force, it is difficult to prevent the tipping of the shovel 100 by bringing the bucket 6 into contact with the ground. Furthermore, the static unstable condition of the shovel 100 includes, for example, includes a pose state where the relative angle (swing angle) between the traveling direction of the lower traveling structure 1 and the orientation of the upper swing structure 3 (namely, the orientation of the attachment) is relatively large (hereinafter "third unstable pose state"). This is because, for example, the ground contact length of the lower traveling structure 1 is smaller in the width direction than in the traveling direction, so that when the orientation of the attachment is relatively close to the width direction of the lower traveling structure 1, the shovel 100 is likely to tip over because of the weight of the attachment, the motion of the attachment, or the like.

For example, the unstable condition determining part 3003 determines the pose state of the shovel 100 based on the shovel conditions information. The unstable condition determining part 3003 may determine whether the shovel 100 is in the static unstable condition based on whether the determined pose state corresponds to any of the first unstable pose state through the third unstable pose state.

Furthermore, for example, the unstable condition determining part 3003 obtains an index value that represents the current static stability of the shovel 100 (hereinafter "static stability index value"). The unstable condition determining part 3003 may determine that the static unstable condition has occurred in the shovel 100 when the static stability index value exceeds a predetermined threshold in the direction to cause static instability, namely, in the direction to cause the first unstable state through the third unstable pose state.

The static stability index value may be a physical quantity related to the condition of the shovel 100 whose correlation with the static unstable condition of the shovel 100 is relatively high (for example, the horizontal distance of the bucket 6 relative to the machine body in the first unstable state). Furthermore, the static stability index value may be calculated as overall stability based on at least one of information on the position of the center of gravity of the shovel 100, information on the position of the bucket 6 relative to the machine body, information on the operation state of the attachment, information on the relative angle between the orientation of the crawlers 1C and the orientation of the upper swing structure 3, etc.

Furthermore, the unstable condition of the shovel 100 may include, for example, an unstable condition resulting from the motion of the shovel 100, namely, the dynamic unstable condition (hereinafter "dynamic unstable condition") of the shovel 100. That is, the stability of the shovel 100 may include dynamic stability corresponding to the above-described dynamic unstable condition of the shovel 100 (hereinafter "dynamic stability").

The dynamic unstable condition of the shovel 100 includes, for example, a condition where the shovel 100 (the lower traveling structure 1) slips forward or backward because of a reaction force applied to the attachment from the ground during excavation work or leveling work, or the like (hereinafter "forward slip unstable condition" or "backward slip unstable condition"). Hereinafter, the forward slip unstable condition and the backward slip unstable condition may be collectively referred to as "slip unstable condition." Furthermore, the dynamic unstable condition of the shovel 100 includes, for example, a condition where the front or the back of the shovel 100 (the lower traveling structure 1) lifts up because of an excavation reaction force or the like (hereinafter "front lift unstable condition" or "back lift unstable condition"). The front lift unstable condition may include a jack-up state where the front of the lower traveling structure 1 lifts up because of the lowering motion of the boom 4 or the closing motion of the arm 5 being further made with the bucket 6 contacting the ground. Hereinafter, the front lift unstable condition and the back lift unstable condition may be collectively referred to as "lift unstable condition." Furthermore, the dynamic unstable condition of the shovel 100 includes, for example, a condition where vibrations are generated in the machine body of the shovel 100 because of changes in the moment of inertia of the attachment during the aerial motion (motion with the bucket 6 out of contact with the ground) of the attachment of the shovel 100 (hereinafter "vibration unstable condition" for convenience).

Furthermore, the unstable condition of the shovel 100 may include, for example, an unstable condition resulting from the shape of the ground on which the shovel 100 is positioned (hereinafter "topographically unstable condition"). That is, the stability of the shovel 100 may include topographical stability corresponding to the above-described topographically unstable condition of the shovel 100 (hereinafter "topographical stability").

The topographically unstable condition of the shovel 100 may include, for example, a condition where the lower traveling structure 1 is topographically affected to slip forward or backward during its traveling or during work with the upper swing structure 3 and the attachment (hereinafter "topographical slip unstable condition"). Furthermore, the topographically unstable condition of the shovel 100 may include, for example, a condition where the lower traveling structure 1 is topographically affected so that part of the lower traveling structure 1 lifts up during its traveling or during work with the upper swing structure 3 and the attachment (hereinafter "topographical lift unstable condition"). Furthermore, the topographically unstable condition of the shovel 100 may include, for example, a condition where the machine body is topographically affected to tilt or shake during the traveling of the lower traveling structure 1 or during the work of the shovel 100 with the upper swing structure 3 and the attachment (hereinafter "topographical tilt unstable condition"). Furthermore, the topographically unstable condition of the shovel 100 may include, for example, a condition where the machine body is topographically affected to vibrate during the traveling of the lower traveling structure 1 or during the work of the shovel 100 with the upper swing structure 3 and the attachment (hereinafter "topographical vibration unstable condition"). Topographical influence may include the geology of the ground, the moisture of the ground, the inclination of the ground, the unevenness of the ground, and the collapse of the ground.

For example, the unstable condition determining part 3003 determines whether a slip of the lower traveling structure 1, a lift of the lower traveling structure 1, a tilt (including a shake) of the machine body, vibrations of the machine body, or the like has occurred based on the shovel conditions information. If any of these motions has occurred, the unstable condition determining part 3003 may determine the operation state of actuators and the topographical condition of the surrounding area of the shovel 100 based on the shovel conditions information and the surrounding conditions information and determine whether the dynamic unstable condition or the topographically unstable condition has occurred.

Furthermore, the unstable condition determining part 3003, for example, obtains an index value that represents the dynamic stability of the shovel 100 (hereinafter "dynamic stability index value"). The unstable condition determining part 3003 may determine that the dynamic unstable condition has occurred in the shovel 100 when the dynamic stability index value exceeds a predetermined threshold in the direction to cause instability.

The dynamic stability index value may be a physical quantity related to the condition of the shovel 100 whose correlation with the dynamic unstable condition of the shovel 100 is relatively high (for example, the cylinder pressure of the rod-side oil chamber of the boom cylinder 7 in the case of the front lift unstable condition). Furthermore, the dynamic stability index value may be calculated as overall stability based on at least one of information on the position of the center of gravity of the shovel 100, information on the tilt state of the machine body, information on the position of the bucket 6 relative to the machine body, information on the operation state of the attachment, information on the relative angle between the orientation of the crawlers 1C and the orientation of the upper swing structure 3, and information on a reaction force applied to the machine body (the upper swing structure 3) from the attachment (for example, information on the detection of the cylinder pressure of the boom cylinder 7).

Furthermore, the unstable condition determining part 3003 may determine whether there is a sign that the stability of the shovel 100 falls below a predetermined reference level. That is, the unstable condition determining part 3003 may determine whether the shovel 100 shows a sign of the above-described unstable condition.

For example, the unstable condition determining part 3003 determines the pose state of the shovel 100 and the operation state of actuators based on the shovel conditions information. The unstable condition determining part 3003 may determine that there is a sign of the static unstable condition if actuators are being operated in the direction toward the unstable pose state while the pose state of the shovel 100 is relatively close to any of the first unstable pose state through the third unstable pose state. Furthermore, the unstable condition determining part 3003 may determine that there is a sign of the static unstable condition if the static stability index value moves toward a predetermined threshold from the stable side to be relatively close to the predetermined threshold.

Furthermore, for example, the unstable condition determining part 3003 may determine that there is a sign of the dynamic unstable condition if the dynamic stability index value of the shovel 100 moves toward a predetermined threshold from the stable side to be relatively close to the predetermined threshold.

Furthermore, for example, the unstable condition determining part 3003 determines the topographical condition of an area surrounding the shovel 100 based on the surrounding conditions information. Then, by determining that the topographical condition of the area surrounding the shovel 100 has changed from its past topographical condition, the unstable condition determining part 3003 may determine whether there is a sign of the occurrence of a slip of the lower traveling structure 1, a lift of the lower traveling structure 1, a tilt of the machine body, vibrations of the machine body, or the like due to topographical influence, namely, a sign of the occurrence of the topographically unstable condition.

The stabilization control part 3004 performs control with respect to a safety function (hereinafter "second safety function" for convenience) and activates the second safety function when the unstable condition determining part 3003 determines that the shovel 100 is in the unstable condition or shows a sign of the unstable condition.

The second safety function may include, for example, a notification function to notify the operator or the like in the cabin 10 or a worker, etc., around the shovel 100 that the shovel 100 is in the unstable condition or that the shovel 100 shows a sign of the unstable condition by outputting an alarm to at least one of the inside and the outside of the cabin 10. Hereinafter, the same as in the case of the first safety function, the notification function for the inside of the cabin 10, namely, the operator or the like, and the notification function for the outside of the cabin 10, namely, a worker, etc., around the shovel 100, may be distinguished by being referred to as "internal notification function" and "external notification function," respectively.

The stabilization control part 3004, for example, activates the notification function when the unstable condition determining part 3003 determines that the shovel 100 is in the unstable condition or shows a sign of the unstable condition.

The stabilization control part 3004, for example, activates a sound (namely, auditory) notification function with respect to the unstable condition of the shovel 100 for at least one of the inside and the outside of the cabin 10 by controlling the sound output device 52.

Furthermore, the stabilization control part 3004, for example, activates a display (namely, visual) notification function with respect to the unstable condition of the shovel 100 for the inside the cabin 10 by controlling the display device 50.

Furthermore, the stabilization control part 3004, for example, may activate a visual notification function with respect to the unstable condition of the shovel 100 for a worker, a supervisor, etc., around the shovel 100 by controlling a headlight or an external display device provided in the house or the like of the upper swing structure 3. Furthermore, the stabilization control part 3004, for example, may activate a tactile notification function with respect to the unstable condition of the shovel 100 for the operator inside the cabin 10 by controlling a vibration generator that vibrates an operator seat where the operator sits. This enables the controller 30 to cause the operator and a worker, a supervisor, etc., around the shovel 100 to be aware that the shovel 100 is in the unstable condition or shows a sign of the unstable condition. Therefore, the controller 30 can encourage the operator to perform an operation for stabilizing the shovel 100 or to leave the shovel 100 and encourage a worker, etc., within the monitoring area to leave an area surrounding the shovel 100.

Furthermore, the second safety function may include, for example, a motion control function to control the motion of the attachment to stabilize the shovel 100.

The stabilization control part 3004, for example, outputs a control command to the hydraulic pressure control valve 25V when the unstable condition determining part 3003 determines that the shovel 100 is in the unstable condition or shows a sign of the unstable condition. By this, the motion of the shovel 100 including the motion of the attachment is restricted in such a manner as to become slower than according to operation details or be stopped independent of operation details. Therefore, the stabilization control part 3004 can prevent the pose state of the shovel 100 from further shifting toward instability.

Furthermore, in the case where a hydraulic pressure control valve is provided in the pilot line 27 in place of the hydraulic pressure control valve 25V, the stabilization control part 3004 may restrict the motion of the attachment by outputting a control command only to a hydraulic pressure control valve corresponding to the attachment.

Furthermore, the stabilization control part 3004 may output a control command to the hydraulic pressure control valve 25V to restrict only a motion that shifts the pose state of the shovel 100 further toward instability and allow a motion that shifts the pose state of the shovel 100 toward stability. This enables the stabilization control part 3004 to encourage the operator or the like to operate actuators in such a manner as to shift the pose state of the shovel 100 toward stability while preventing the pose state of the shovel 100 from shifting further toward instability.

Furthermore, the stabilization control part 3004, for example, outputs a control command to the relief valve 7BV or the relief valve 7RV when the unstable condition determining part 3003 determines that the shovel 100 is in the unstable condition or shows a sign of the unstable condition.

When the shovel 100 is in the front lift unstable condition or shows a sign of the front lift unstable condition, the pressure of the rod-side oil chamber of the boom cylinder 7 is excessive. Therefore, the stabilization control part 3004 reduces the pressure of the rod-side oil chamber of the boom cylinder 7. Furthermore, when the shovel 100 is in the back lift unstable condition or shows a sign of the back lift unstable condition, the pressure of the bottom-side oil chamber of the boom cylinder 7 is excessive. Therefore, the stabilization control part 3004 reduces the pressure of the bottom-side oil chamber of the boom cylinder 7. The applies to the case where the shovel 100 is in the vibration unstable condition or shows a sign of the vibration unstable condition. Therefore, the stabilization control part 3004 can control the motion of the attachment by reducing the pressure of a predetermined one of the oil chambers of the boom cylinder 7 according to the type of the dynamic unstable condition to prevent the occurrence of the dynamic unstable condition of the shovel 100.

Specifically, the stabilization control part 3004 obtains information on the cylinder pressure of the boom cylinder 7 based on the shovel conditions information and causes an excessive one of the pressures of the bottom-side oil chamber and the rod-side oil chamber of the boom cylinder 7 to be released through the relief valve 7BV or the relief valve 7RV. More specifically, the stabilization control part 3004 determines the magnitude of a control current for the relief valves 7BV and 7RV based on the detection values of the pressures of the bottom-side oil chamber and the rod-side oil chamber of the boom cylinder 7. Then, the stabilization control part 3004 outputs the determined control current to one of the relief valves 7BV and 7RV to cause an excessive one of the pressures of the bottom-side oil chamber and the rod-side oil chamber of the boom cylinder 7 to be released through the relief valve 7BV or the relief valve 7RV. This enables the stabilization control part 3004 to control the dynamic unstable condition of the shovel 100 or prevent the occurrence of the dynamic unstable condition of the shovel 100 to stabilize the shovel 100.

Furthermore, the stabilization control part 3004 can prevent a slip of the lower traveling structure 1, a lift of the lower traveling structure 1, a tilt or shake of the vehicle body, vibrations of the vehicle body, etc., corresponding to the topographically unstable condition of the shovel 100 in the same manner as in the case of the dynamic unstable condition.

The theft determining part 3005 determines whether the shovel 100 is about to be stolen.

For example, the theft determining part 3005 may determine whether the shovel 100 has been started in a proper manner during the starting of the shovel 100 and determine that the shovel 100 is about to be stolen when the shovel 100 has not been started in a proper manner. The proper manner is, for example, inserting a predetermined key into a key cylinder and turning the key cylinder to turn on a key switch.

Furthermore, for example, the theft determining part 3005 may recognize a person in the cabin 10 based on the shovel conditions information (for example, the image information of the inside of the cabin 10) during the starting of the shovel 100 and determine that the shovel 100 is about to be stolen if the recognized person is different from a pre-registered user.

Furthermore, for example, the theft determining part 3005 may analyze the surrounding conditions information (for example, the image information of the image capturing device 40) and determine whether the surrounding conditions correspond to the theft of the shovel 100.

The theft prevention control part 3006 performs control with respect to a theft prevention function (an example of a security function) and activates the theft prevention function when the theft determining part 3005 determines that the shovel 100 is about to be stolen.

The theft prevention function may include, for example, a notification function to output an alarm to the outside of the cabin 10, transmit a warning signal to a predetermined external apparatus (for example, the management apparatus 200), and notify the surroundings of the shovel 100 or an external apparatus that the shovel 100 is about to be stolen.

The theft prevention control part 3006 activates the notification function with respect to the theft of the shovel 100 when the theft determining part 3005 determines that the shovel 100 is about to be stolen.

The theft prevention control part 3006, for example, activates a sound (namely, auditory) notification function with respect to the theft of the shovel 100 for the outside of the cabin 10 (the surroundings of the shovel 100) by controlling the sound output device 52.

Furthermore, the theft prevention control part 3006, for example, may activate a visual notification function with respect to the theft of the shovel 100 for the surroundings of the shovel 100 by controlling a headlight or an external display device provided in the house or the like of the upper swing structure 3.

Furthermore, the theft prevention control part 3006, for example, may activate a notification function with respect to the theft of the shovel 100 for the management apparatus 200 in the form of transmitting a warning signal indicating that the shovel 100 is about to be stolen to the management apparatus 200 by controlling the communications device T1. This enables a manager, a worker or the like at the management apparatus 200 to be aware of and respond to the theft of the shovel 100 that is an object of management.

Furthermore, the theft prevention function may include, for example, a forced stop function to force the shovel 100 to stop and shift the shovel 100 to a non-startable state (non-startable mode) unless a predetermined cancel operation is performed.

The theft prevention control part 3006 activates the forced stop function when the theft determining part 3005 determines that the shovel 100 is about to be stolen. This forces the shovel 100 to stop so that the shovel 100 is unable to start. Therefore, for example, it is difficult to move the shovel 100 onto the bed of a transportation truck, thus making it possible to make a malicious third part give up the theft of the shovel 100.

The recording trigger determining part 3007 determines the presence or absence of the occurrence of a predetermined event that serves as a trigger for the recording of information by the recording part 3008 (hereinafter "recording trigger event").

The recording trigger event represents a situation where one of the safety and the security of the shovel 100 is relatively reduced.

Examples of recording trigger events include the release of a gate lock. This is because when the gate lock is released, the pilot line 25 changes from a closed state to an open state through a gate lock control valve to enable the shovel 100 to start moving, so that the security may be reduced in relation to a worker around or in the house or the like of the shovel 100. Specifically, in a situation where it is highly likely that a worker has entered an area close to the shovel 100 or the house or the like of the shovel 100 as the shovel 100 is stopped, the safety of the shovel 100 is relatively reduced as the shovel 100 starts moving.

Furthermore, examples of recording trigger events include starting an operation regarding the upper swing structure 3 (hereinafter "operation for swinging") in a state where no operation for swinging is performed. This is because when the upper swing structure 3 starts swinging, there may be contact between the upper swing structure 3 and an obstacle (for example, a worker) present within the swing radius of the upper swing structure 3 (the radius from a swing axis to the outermost edge of the upper swing structure 3) around the shovel 100.

Furthermore, examples of recording trigger events include starting an operation regarding the lower traveling structure 1 (hereinafter "operation for traveling") in a state where no operation for traveling is performed. This is because when the lower traveling structure 1 starts traveling, there may be contact between the upper swing structure 3 and an obstacle (for example, a worker) present in the traveling path of the lower traveling structure 1.

Furthermore, examples of recording trigger events include performing an operation to lower the boom 4. This is because when the boom 4 moves in a lowering direction, the attachment may approach and contact an obstacle such as a worker present on the ground.

Furthermore, examples of recording trigger events include the detection of a monitoring target around the shovel 100 by the object detecting part 3001, namely, an event regarding the detection of a monitoring target by the object detecting part 3001. This is because in a situation where an obstacle that is a monitoring target is present around the shovel 100, the obstacle and the shovel 100 are more likely to come into contact.

The event regarding the detection of a monitoring target by the object detecting part 3001 may be, for example, the object detecting part 3001 detecting a monitoring target at a position relatively close to (for example, within two meters from) the shovel 100 within the monitoring area. This is because even within the monitoring area, the monitoring target is less likely to contact the shovel 100 at some distance from the shovel 100.

Furthermore, the event regarding the detection of a monitoring target by the object detecting part 3001 may be, for example, the detection of a monitoring target based on the output of the nearby object information obtaining device 45. This is because, as described above, the detection accuracy tends to be higher in the case where a monitoring target is detected from the received light information of the nearby object information obtaining device 45 than in the case where a monitoring target is detected through image recognition on an image captured by the image capturing device 40. That is, this is because the nearby object information obtaining device 45 (the sensor 45X) is more reliable than the image capturing device 40 (the camera 40X) with respect to the detection of a monitoring target by the object detecting part 3001. Therefore, for example, while the free space of the storage area (the storage part 3010) may be unnecessarily reduced if the recording part 3008 records information in spite of relatively low detection accuracy for a monitoring target, it is possible to prevent such a situation.

There may be a case where the detection of a monitoring target based on the output of the image capturing device 40 corresponds to the recording trigger event. For example, while the detection of a monitoring target based on the output of the nearby object information obtaining device 45 corresponds to the recording trigger event independent of other conditions, the detection of a monitoring target based on the output of the image capturing device 40 corresponds to the recording trigger event on condition that one or more other conditions are further satisfied. That is, for each of the image capturing device 40 and the nearby object information obtaining device 45, whether the detection of a monitoring target based on its output corresponds to the recording trigger event or the condition under which the detection of a monitoring target based on the output corresponds to the recording trigger event may be different.

Furthermore, the event regarding the detection of a monitoring target by the object detecting part 3001 may be, for example, the detection of a person from among monitoring targets by the object detecting part 3001. This is because a person has the highest priority among multiple types of monitoring targets in terms of ensuring safety, and the need for recording information in a situation where a person is detected and analyzing an accident involving a person around the shovel 100 is relatively high. This makes it possible to control a decrease in the free space of the storage area (the storage part 3010) while satisfying the need for recording information in a situation where a person is detected.

Furthermore, examples of recording trigger events include the unstable condition determining part 3003 determining that the shovel 100 is in the unstable condition or that the shovel 100 shows a sign of the unstable condition. This is because when the shovel 100 is in the unstable condition or the shovel 100 shows a sign of the unstable condition, the tipping, etc., of the shovel 100 are more likely to occur.

Furthermore, examples of recording trigger events include the theft determining part 3005 determining the theft of the shovel. This is because a situation where the shovel 100 is about to be stolen is exactly a situation where the security of the shovel 100 is relatively reduced.

Furthermore, examples of recording trigger events include the activation of the safety function (for example, the first safety function, the second safety function or the like) of the shovel 100. This is because a situation where the safety function of the shovel 100 is activated is exactly a situation where the safety of the shovel 100 is relatively reduced.

Furthermore, examples of recording trigger events include the activation of the theft prevention function of the shovel 100. This is because a situation where the theft prevention function of the shovel 100 is activated is exactly a situation where the security of the shovel 100 is relatively reduced.

Furthermore, examples of recording trigger events include the acceptance of an operation input to the recording request operation part 54a (an example of a predetermined operation input). This is because the operation of the recording request operation part 54a is used to request the recording part 3008 to record information. Furthermore, as described above, the recording request operation part 54a is used in a situation where the safety or security of the shovel 100 is relatively reduced.

Furthermore, examples of recording trigger events include the occurrence of an impact that cannot be caused in normal work, specifically, the occurrence of an impact at or above a predetermined reference level, in the shovel 100. This is because when an impact that cannot be caused in normal work acts on the shovel 100, a situation corresponding to a relative decrease in the safety of the shovel 100, such as the tipping of the shovel 100, the fall of the shovel 100 from a height, or the collision of a falling object (for example, a falling rock) with the shovel 100, is believed to have occurred. The predetermined reference level is, for example, determined in advance through experiments, computer simulations, or the like, based on the assumption of the specific situations of the tipping of the shovel 100, the fall of the shovel 100 from a height, the collision of a falling object with the shovel 100, etc.

The details of the recording trigger event may be recorded (set) inside the controller 30 (for example, in a secondary storage) or in an external storage that can communicate with the controller 30. This enables the controller 30 (the recording trigger determining part 3007) to determine whether a recording trigger event has occurred according to the recorded (set) details of recording trigger event. Furthermore, the recorded details (set details) of the recording trigger event may be in such form as to be able to be checked through the display device 50 by a user. That is, the display device 50 may display the set details of the recording trigger event under the control of the controller 30. This enables a user such as the operator of the shovel 100 to know the recorded details (set details) of the recording trigger event. Furthermore, the details of the recording trigger event may be such that new settings may be provided and existing settings may be changed according to inputs from the user. For example, the controller 30 may cause a setting screen for the recording trigger event to be displayed on the display device 50 and set the details of the recording trigger event according to operations on the setting screen performed through the input device 54 by the user such as the operator. This enables the user to newly set (record) the details of the recording trigger event and change the details of the existing recording trigger event manually.

When the recording trigger determining part 3007 determines the occurrence of a recording trigger event, the recording part 3008 records, in the storage part 3010, log information including the surrounding conditions information and the shovel conditions information (hereinafter "event occurrence log information") during a predetermined period (for example, several dozen seconds) from before to after the occurrence of the recording trigger event (hereinafter "recording period"). Furthermore, the event occurrence log information includes, as basic information, information that represents the occurrence of a recording trigger event. The information representing the occurrence of a recording trigger event includes, for example, information that represents the details (type) of a recording trigger event that has occurred. Furthermore, the information representing the occurrence of a recording trigger event may include, for example, information that represents the date and time of the occurrence of a recording trigger event. Furthermore, the information representing the occurrence of a recording trigger event may include, for example, information that represents the position of the shovel 100 at the time of the occurrence of a recording trigger event.

For example, the shovel 100 has an extremely great weight. Therefore, even when an accident such as a minor collision with a relatively light obstacle (for example, a person such as a worker) occurs, it is difficult to detect its impact using an acceleration sensor or the like. Furthermore, a user such as the operator is highly likely to continue the operation state as is without noticing the impact, so that it is difficult to identify accidental contact with an obstacle form the operation state of the shovel corresponding to the sudden stop of actuators due to the occurrence of an accident. Furthermore, according to the shovel 100, the sudden stop of actuators is used with a certain frequency in terms of giving a top priority to safety. Therefore, this also makes it difficult to identify accidental contact with an obstacle form the operation state of the shovel 100 corresponding to the sudden stop of actuators due to the occurrence of an accident. Furthermore, there may also be a need for recording the surrounding conditions information and the shovel conditions information not only at the time of the occurrence of the accident of the shovel 100 but also at the time of the occurrence of the theft of the shovel 100 and using the information to identify a thief and tracking the stolen shovel 100.

It is also possible to constantly record the surrounding conditions information and the shovel conditions information in the shovel 100. The capacity of a storage mounted in the shovel 100, however, is somewhat limited, so that the capacity may be used up before extracting the information to the outside.

In contrast, according to this embodiment, the controller 30 records the event occurrence log information including the surrounding conditions information and the shovel conditions information at the time of the occurrence of a recording trigger event that represents a situation where at least one of the safety and the security of the shovel 100 is relatively reduced. This enables the controller 30 to limit the surrounding conditions information and the shovel conditions information to record to information on a situation that is highly correlated with the occurrence of the accident or the occurrence of the theft of the shovel 100. Therefore, the controller 30 can record the event occurrence log information including the surrounding conditions information and the shovel conditions information corresponding to the occurrence of the accident, the occurrence of the theft, etc., of the shovel 100 while controlling a decrease in the available capacity of the storage. That is, the controller 30 can more appropriately record the surrounding conditions information and the shovel conditions information corresponding to the occurrence of the accident, the occurrence of the theft, etc., of the shovel 100.

Furthermore, according to this embodiment, the controller 30 can record the surrounding conditions information and the shovel conditions information before the occurrence, at the occurrence, and after the occurrence of a recording trigger event. Therefore, for example, a user can investigate and analyze conditions surrounding the shovel 100 and the conditions of the shovel 100 over a period before and after the occurrence of an accident or the occurrence of a theft in more detail. Therefore, the controller 30 can more appropriately record the surrounding conditions information and the shovel conditions information corresponding to the occurrence of the accident, the occurrence of the theft, etc., of the shovel 100.

The recording part 3008 may either record the event occurrence log information irrespective of a command from the management apparatus 200 or record the event occurrence log information in response to a command from the management apparatus 200. In other words, the management apparatus 200 may cause the shovel 100 (the controller 30) to record the event occurrence log information during the recording period from before to after the occurrence of a recording trigger event by transmitting a control command to the shovel 100. In this case, the management apparatus 200 transmits a control command regarding the recording of the event occurrence log information to the shovel 100 once, and the shovel 100 (the controller 30) may thereafter automatically record the event occurrence log information according to the details of the control command. Furthermore, the function of the recording trigger determining part 3007 may be transferred to the management apparatus 200. The management apparatus 200 (a control device 210) may determine the presence or absence of the occurrence of a recording trigger event based on information uploaded from the shovel 100 and transmit a control command to cause the shovel 100 to record the event occurrence log information each time a recording trigger event occurs in the shovel 100.

The temporary storage part 3009 temporarily retains the surrounding conditions information and the shovel conditions information fed from the surrounding conditions information obtaining device S1 and the shovel conditions information obtaining device S2, and discards the information after the passage of a predetermined period (for example, several dozen seconds) (hereinafter "retention period"). The temporary storage part 3009 is, for example, a ring buffer defined in a volatile storage such as a memory unit, and constantly retains the surrounding conditions information and the shovel conditions information for a period going back for the retention period from the latest point of time.

As described above, the event occurrence log information including the surrounding conditions information and the shovel conditions information over the retention period from before to after the occurrence of a recording trigger event is stored (recorded) in the storage part 3010. The storage part 3010 is, for example, a storage area defined in a nonvolatile storage such as a secondary storage. An area of the storage part 3010 in which the event occurrence log information including the surrounding conditions information and the shovel conditions information has been stored may be set to be overwrite-protected. This enables the controller 30 to prevent a situation where the recorded event occurrence log information including the surrounding conditions information and the shovel conditions information is erased. For example, records of the event occurrence log information composed of the type of a recording trigger event, the date and time of the occurrence of a recording trigger event, the surrounding conditions information during the recording period (time-series data), the shovel conditions information during the recording period (time-series data), etc., are accumulated in the storage part 3010. As a result, a database of the event occurrence log information regarding the occurrence of the recording trigger event is constructed in the storage part 3010.

For example, when the recording trigger determining part 3007 determines the occurrence of a recording trigger event, the recording part 3008 immediately reads the surrounding conditions information and the shovel conditions information corresponding to the recording period from the temporary storage part 3009 and records the event occurrence log information in the storage part 3010. That is, the recording part 3008 records the event occurrence log information including the surrounding conditions information and the shovel conditions information corresponding to the recording period in the storage part 3010 at the occurrence of a recording trigger event. This enables the controller 30 to cause the surrounding conditions information and the shovel conditions information (the event occurrence log information) before and after the occurrence of a recording trigger event relatively highly correlated with the occurrence of the accident or the occurrence of the theft of the shovel 100 to be retained in the nonvolatile storage part 3010 after the shovel 100 is stopped. Therefore, a serviceperson or the like can later extract the surrounding conditions information and the shovel conditions information (the event occurrence log information) into a predetermined terminal by connecting the terminal and the shovel 100 by a predetermined cable and use the information to analyze the accident, theft, etc., of the shovel 100.

All of the surrounding conditions information and the shovel conditions information during the operation of the shovel 100 may be retained (accumulated) in the temporary storage part 3009. The period during the operation of the shovel 100 is from the start (turning on the key switch) to the stop (turning off the key switch) of the shovel 100. In this case, the temporary storage part 3009 has a relatively large capacity. For example, the temporary storage part 3009 is provided in a secondary storage in such a manner as to be distinguished from the storage part 3010, and the surrounding conditions information and the shovel conditions information of a ring buffer are moved to and continuously accumulated in the temporary storage part 3009. Furthermore, in this case, the recording part 3008 extracts the surrounding conditions information and the shovel conditions information during the recording period before and after the occurrence of a recording trigger event from the surrounding conditions information and the shovel conditions information during the operation of the shovel 100 accumulated in the temporary storage part 3009. Then, the recording part 3008 may record the extracted surrounding conditions information and shovel conditions information in the storage part 3010. The recording part 3008 may perform the extraction and recording at the occurrence of a recording trigger event or later at one time. For example, the recording part 3008 may extract the information during the recording period before and after the occurrence of each recording trigger event from the information over the entire period from the start to the stop of the shovel 100 and record the extracted information in the storage part 3010 all together while the shovel 100 is stopped. In this case, the recording part 3008 may change the surrounding conditions information and the shovel conditions information during the recording period before and after the occurrence of a recording trigger event among the information accumulated in the temporary storage part 3009 to the overwrite-protected state in recording the event occurrence log information. That is, the recording part 3008 may record the event occurrence log information by switching the data area of the information during the recording period before and after the occurrence of a recording trigger event in a storage area corresponding to the temporary storage part 3009 to a storage area corresponding to the storage part 3010.

The transmission part 3011 transmits the event occurrence log information including the surrounding conditions information and the shovel conditions information stored (recorded) in the storage part 3010 to the management apparatus 200 through the communications device T1. This enables a manager, a worker or the like at the management apparatus 200 to analyze the accident, theft, etc., of the shovel 100 using the surrounding conditions information and the shovel conditions information at the occurrence of a recording trigger event received from the shovel 100.

For example, each time the event occurrence log information including the surrounding conditions information and the shovel conditions information is recorded in the storage part 3010, the transmission part 3011 transmits the recorded event occurrence log information of each time to the management apparatus 200.

Furthermore, for example, the transmission part 3011 transmits the event occurrence log information including the surrounding conditions information and the shovel conditions information of each time all together to the management apparatus 200 at a predetermined time. The predetermined time may be, for example, when the shovel 100 is stopped (the key switch is OFF). Furthermore, the predetermined time may also be, for example, when the free space of the storage part 3010 has dropped to or below a predetermined threshold. Furthermore, the predetermined time may also be, for example, when a transmission request is received from the management apparatus 200.

Furthermore, for example, the transmission part 3011 may transmit only part of the recorded event occurrence log information to the management apparatus 200. The transmission part 3011 may transmit, for example, only information that represents the occurrence of a recording trigger information in the event occurrence log information to the management apparatus 200. This enables a user of the management apparatus 200 to, for example, macroscopically conduct a statistical analysis using information representing the type, information representing the date and time, information representing the position of a recording trigger event, etc., included in the information representing the occurrence of a recording trigger event. Therefore, the controller 30 can relatively reduce the amount of data to be transmitted while causing the outside (the management apparatus 200) to obtain minimum information necessary to analyze the occurrence of an accident, the occurrence of a theft, or the like corresponding to the occurrence of a recording trigger event. Therefore, it is possible to suppress an increase in a communication load on the transmission line NW and to reduce communication charges due to the use of the transmission line NW. In this case, the management apparatus 200 may transmit a request signal to request the transmission of the remaining event occurrence log information other than the received information in response to a user's input through a below-described input device 240. In response to the reception of the request signal from the management apparatus 200 by the communications device Tl, the transmission part 3011 may transmit the remaining event occurrence log information to the management apparatus 200 from the communications device T1. Furthermore, the event occurrence log information including information yet to be transmitted may be readable from the shovel 100 into an external apparatus.

The transmission part 3011 may either transmit the event occurrence log information to the management apparatus 200 irrespective of a command from the management apparatus 200 or transmit the event occurrence log information to the management apparatus 200 in response to a command from the management apparatus 200. In other words, the management apparatus 200 may cause the event occurrence log information to be transmitted from the shovel 100 (the controller 30) to the management apparatus 200 by transmitting a control command to the shovel 100.

In this case, the management apparatus 200 may transmit a control command regarding the transmission of the event occurrence log information to the shovel 100 once and the shovel 100 (the controller 30) may thereafter automatically transmit the event occurrence log information to the management apparatus 200 according to the details of the control command. Furthermore, as described above, the function of the recording trigger determining part 3007 may be transferred to the management apparatus 200. The management apparatus 200 (the control device 210) may determine the presence or absence of the occurrence of a recording trigger event based on information uploaded from the shovel 100 and transmit, to the shovel 100, a control command to cause the shovel 100 to transmit the event occurrence log information to the management apparatus 200 each time a recording trigger event occurs in the shovel 100. Furthermore, the transmission destination of the event occurrence log information may be other than the management apparatus 200. Furthermore, instead of or in addition to being transmitted to an external apparatus such as the management apparatus 200, the event occurrence log information may be read into an external apparatus wire-connected to the shovel 100 (the controller 30). Examples of external apparatuses wire-connected to the shovel 100 (the controller 30) include portable storages such as a USB (Universal Serial Bus) memory and an SD memory card and laptop computer terminals that are cable-connected. In this case, the event occurrence log information including information yet to be transmitted in the case where part of the event occurrence log information is transmitted to an external apparatus such as the management apparatus 200 may be read into an external apparatus wire-connected to the shovel 100.

### <Configuration of Management Apparatus>

The management apparatus 200 includes the control device 210, a communications device 220, a display device 230, and the input device 240.

The control device 210 performs various kinds of control regarding the management apparatus 200. Functions of the control device 210 may be implemented by desired hardware, a desired combination of hardware and software, or the like. For example, the control device 210 is constituted mainly of a computer including a CPU, a memory such as a RAM, a nonvolatile secondary storage such as a ROM, and an interface unit associated with inputs from and outputs to the outside.

The communications device 220 performs communications with an external apparatus (for example, the shovel 100) through the communication line NW. The communications device 220 is, for example, a modem or an ONU (Optical Network Unit). Furthermore, the communications device 220 may be, for example, a mobile communication module that connects to a mobile communication network including a base station as a terminal end. The communications device T1 may also be, for example, a satellite communication module that connects to a satellite communication network using a communications satellite. The communications device T1 may also be, for example, a Wi-Fi communication module or a Bluetooth communication module that performs short-range communications.

The display device 230 displays various information images regarding the management apparatus 200 (for example, information received from the shovel 100, information extracted from a database constructed in a storage part 2102, etc.) to a manager or a worker at the management apparatus 200 under the control of the control device 210. The display device 230 is, for example, a liquid crystal display or an organic EL display.

The input device 240 receives various inputs from a user such as a manager or a worker at the management apparatus 200 and outputs them to the control device 210. The input device 240 includes, for example, hardware operation input means such as a keyboard, a mouse, and a touchscreen. Furthermore, the input device 240 may be, for example, a combination of hardware operation input means such as a mouse and a touchscreen and software input means such as operation icons in an operation screen displayed on the display device 230. Furthermore, the input device 240 may also include a sound input device and a gesture input device that receive sound inputs and gesture inputs from a user.

For example, the control device 210 performs control regarding the function of obtaining and accumulating the event occurrence log information received from the shovel 100 by the communications device 220. Specifically, the control device 210 includes, for example, an information obtaining part 2101 as a functional part implemented by loading a program installed in the secondary storage into the memory unit and running the program on the CPU. Furthermore, the control device 210 uses the storage part 2102. The storage part 2102 may be implemented by the secondary storage in the control device 210, a nonvolatile external storage connected to the control device 210 in such a manner as to be able to perform communications with the control device 210, or the like.

The information obtaining part 2101 obtains the surrounding conditions information and the shovel conditions information at the occurrence of a recording trigger event received from the shovel 100 through the communications device 220 from a reception buffer or the like, and stores the information in the storage part 2102. Specifically, the information obtaining part 2101 creates records composed of the type of a recording trigger event, the date and time of the occurrence of a recording trigger event, the surrounding conditions information during the recording period (time-series data), the shovel conditions information during the recording period (time-series data), etc., and accumulates the records in the storage part 2102. This enables the information obtaining part 2101 to construct a database regarding the occurrence of the recording trigger event in the shovel 100 in the storage part 2102. This enables the management apparatus 200 to generate information related to the occurrence of a recording trigger event (hereinafter "event occurrence log related information") based on the history of the event occurrence log information in the storage part 2102 (hereinafter "event occurrence log history information") and provide a user with the information through the display device 230 as described below. At this point, the information obtaining part 2101 constructs, in the storage part 2102, the database of the event occurrence log information in which the event occurrence log information is organized in the storage part 2102 such that the event occurrence log information that matches the condition of the details of the event occurrence log information can be extracted from the event occurrence log information of each time. This enables the control device 210 to easily and quickly extract appropriate event occurrence log information and generate the event occurrence log related information in response to a request from a user.

Information obtained by the information obtaining part 2101 is stored in the storage part 2102.

Specifically, as described above, a database (record group) regarding the occurrence of the event in the shovel 100 is retained in the storage part 2102 as described above. This enables a manager, a worker or the like at the management apparatus 200 can analyze conditions surrounding the shovel 100 and the conditions of the shovel 100 at the occurrence of a recording trigger event corresponding to each record in the database. Therefore, a user such as a manager, a worker or the like at the management apparatus 200 can identify the cause of an accident that has occurred and identify the thief who has committed (the criminal of) the theft of the shovel 100 that has occurred.

Furthermore, for example, the control device 210 performs control regarding the function of providing a user with the accumulated event occurrence log information of the shovel 100 such that the information is visible to the user. Specifically, the control device 210, for example, includes a log related information providing part 2103 as a functional part implemented by loading a program installed in the secondary storage into the memory unit and running the program on the CPU.

The log related information providing part 2103 provides a user with the event occurrence log related information by generating the event occurrence log related information and causing the information to be displayed in a predetermined format on the display device 230 in response to a predetermined input (request) from the input device 240.

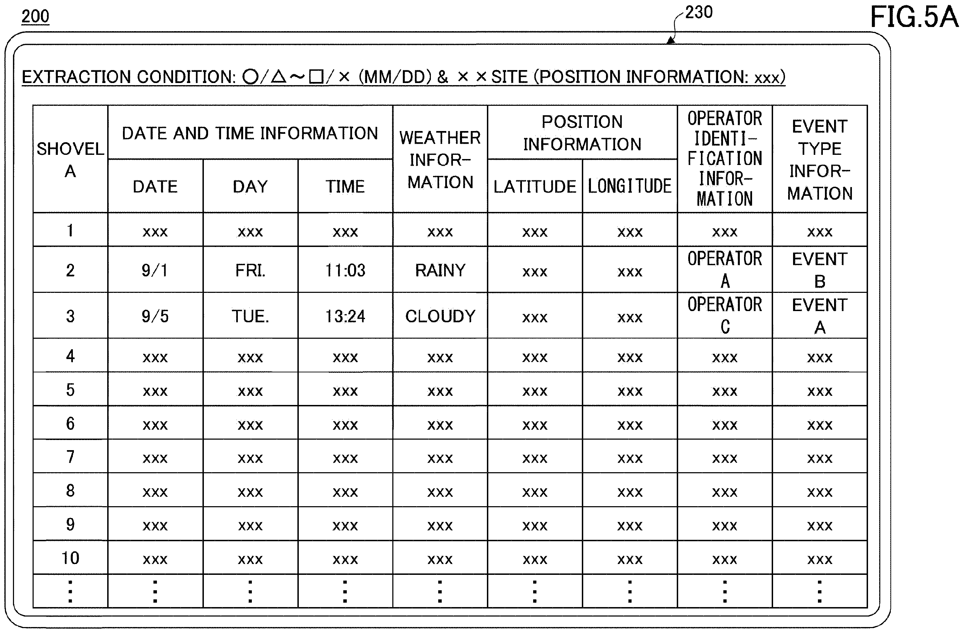

For example, the log related information providing part 2103 may generate, as the event occurrence log related information, information in tabular form in which the event occurrence log history information that matches the condition of the details of the event occurrence log information is extracted from the event occurrence log history information (hereinafter "extracted event occurrence log history information"). The extracted event occurrence log history information is described in detail below (see FIG. 5A).

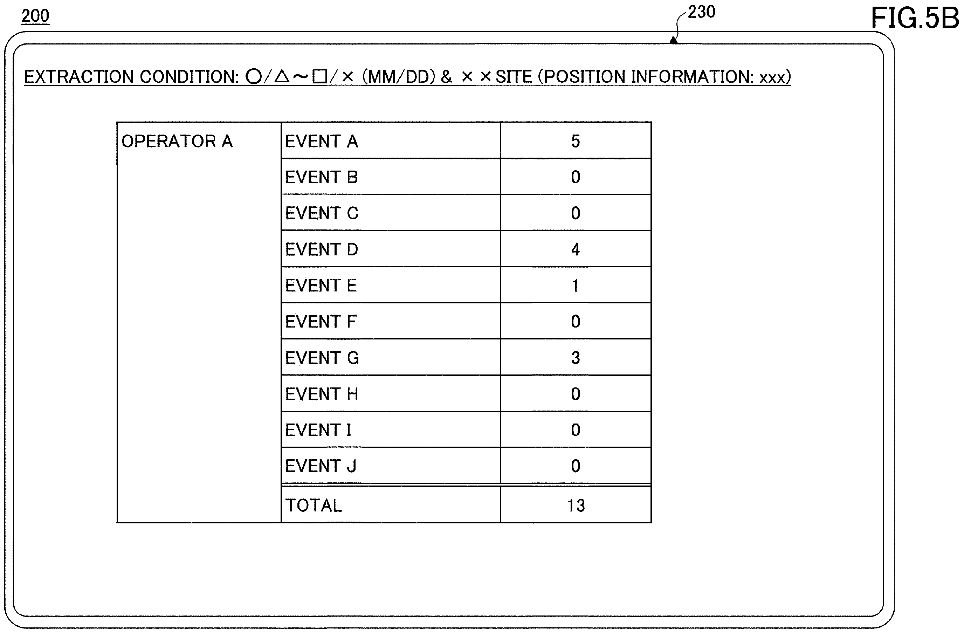

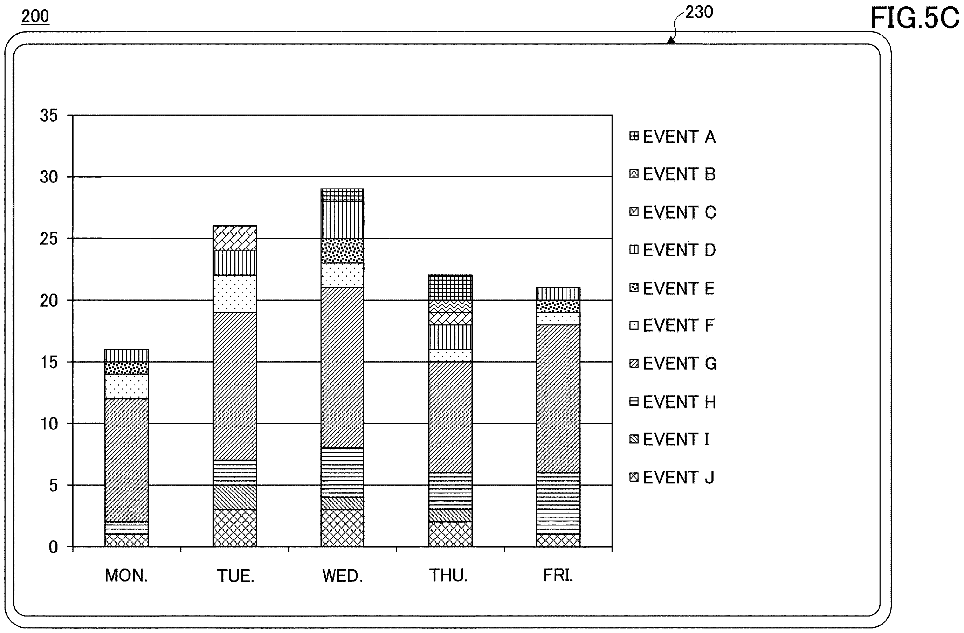

Furthermore, for example, the log related information providing part 2103 generates, as the event occurrence log related information, statistical information regarding the event occurrence of the shovel 100 (hereinafter "event occurrence log statistical information") based on the event occurrence log history information. The event occurrence log statistical information is described in detail below (see FIGS. 5B and 5C) .

The function of the log related information providing part 2103 may be included in the database of the event occurrence log information constructed in the storage part 2102. That is, the database of the event occurrence log information may be organized such that not only the event occurrence log information based on a predetermined condition is extractable but also the event occurrence log statistical information based on a predetermined condition is generable. Furthermore, the management apparatus 200 may transmit the event occurrence log related information and its display specifications to a user terminal connected to the management apparatus 200 in such a manner as to be able to perform communications (for example, the portable terminal or the like of a manager or supervisor at a worksite of the shovel 100) and cause the user terminal to display the event occurrence log related information in a predetermined format. For example, the event occurrence log related information delivered via the management apparatus 200 may be displayed on the display of the portable terminal (user terminal) such as a smartphone or a tablet terminal. Specifically, an application program that can be controlled from the management apparatus 200 may be installed in the user terminal, and the management apparatus 200 may cause the event occurrence log related information to be displayed in a predetermined format on the display of the user terminal in response to a request from the user terminal.

Furthermore, for example, the control device 210 performs control regarding a function for a user checking (viewing) the set details of the recording trigger event from outside the shovel 100. Specifically, the control device 210 may cause the set details of the recording trigger event of the shovel 100 to be displayed on the display device 50 in response to a predetermined input from a user through the input device 240. Furthermore, in the case where the shovel management system SYS includes multiple shovels 100, the control device 210 may cause the set details of the recording trigger event to be displayed on the display device 50 shovel 100 by shovel 100. This enables a user of the management apparatus 200 to check the set details of the recording trigger event of the shovel 100 by operating the management apparatus 200. In this case, the set details of the recording trigger event of the shovel 100 may be suitably transmitted from the shovel 100 to the management apparatus 200.

Furthermore, for example, the control device 210 performs control regarding a function for newly setting a recording trigger event and changing an existing setting from outside the shovel 100. Specifically, the control device 210 may cause a screen regarding the setting of the recording trigger event (setting screen) to be displayed on the display device 50 in response to a predetermined input from a user through the input device 240. The control device 210 may determine the setting of the recording trigger event in response to operations on the setting screen through the input device 240. Furthermore, in the case where the shovel management system SYS includes multiple shovels 100, the control device 210 may cause the setting screen regarding the setting of the recording trigger event to be displayed shovel 100 by shovel 100 and determine the setting of the recording trigger event shovel 100 by shovel 100. This enables a user of the management apparatus 200 to provide settings with respect to the recording trigger event of the shovel 100 by operating the management apparatus 200. In this case, in response to newly setting a recording trigger event or changing existing setting details, the control device 210 causes a request signal to request settings including the newly set details to be transmitted from the communications device 220 to the shovel 100. As a result, newly set details set in the management apparatus 200 is reflected in the shovel 100 (the controller 30) .

### [Specific Examples of Event Occurrence Log Related Information]

Next, specific examples of the event occurrence log related information generated by the management apparatus 200 (the log related information providing part 2103) and displayed on the display device 230 of the management apparatus 200 are described with reference to FIG. 5 (FIGS. 5A through 5C).

### <Specific Example of Extracted Event Occurrence Log History Information>

First, FIG. 5A is a diagram illustrating a first example of the event occurrence log related information displayed on the display device 230 of the management apparatus 200, and is specifically a diagram illustrating an example of the extracted event occurrence log history information.

As illustrated in FIG. 5A, according to this example, the extracted event occurrence log history information (list) in which the event occurrence log information of a time whose date and time information matches "∘/Δ - □/× (mm/dd)," whose position information matches "×× site," and whose shovel identification information matches "Shovel A" is extracted from the event occurrence log history information retained in the management apparatus 200 (the storage part 2102) is displayed on the display device 230 of the management apparatus 200. This enables a user of the management apparatus 200 to selectively check the event occurrence log information during a specific period. Furthermore, a user of the management apparatus 200 can selectively check the event occurrence log information at specific "×× site." Furthermore, a user of the management apparatus 200 can selectively check the event occurrence log information regarding specific "Shovel A." Furthermore, a user of the management apparatus 200 can analyze a tendency, etc., in the event occurrence log information regarding the specific period, specific "×× site," and specific "Shovel A."

In the case of this example, a user of the management apparatus 200, for example, uses the input device 240 to operate an operation screen for causing the event occurrence log related information displayed on the display device 230 to be displayed (hereinafter "log related information obtaining operation screen"). Specifically, a user of the management apparatus 200 sets conditions to limit the date and time information, the position information, and the shovel identification information to "∘/Δ - □/× (mm/dd)," "×× site," and "Shovel A," respectively, on the log related information obtaining operation screen. According to this, the management apparatus 200 (the log related information providing part 2103) extracts the event occurrence log information that matches the set conditions from the event occurrence log history information of the storage part 2102 and displays the information as a list on the display device 230.

Furthermore, it will be appreciated that the extracted event occurrence log history information may be based on conditions set with respect to only one or two of the date and time information, the position information, and the shovel identification information. Furthermore, the extracted event occurrence log history information may be generated based on conditions set with respect to other kinds of information than the date and time information, the position information, and the shovel identification information (for example, a condition that limits the operator identification information to specific "Operator A", a condition that limits the weather information to "cloudy", etc.) instead thereof or in addition thereto.

Furthermore, according to this example, the extracted event occurrence log history information includes only one or some types of information in all kinds of information recorded as the event occurrence log information. This enables a user of the management apparatus 200 to cause only information of one or some types that the user wishes to check to be displayed on the display device 230 in response to a predetermined operation on the input device 240, thus improving user convenience.

### <Specific Example of Event Occurrence Log Statistical Information>

Next, FIG. 5B is a diagram illustrating a second example of the event occurrence log related information displayed on the display device 230 of the management apparatus 200. Specifically, FIG. 5B is a diagram illustrating an example of the event occurrence log statistical information.

As illustrated in FIG. 5B, according to this example, the event occurrence log statistical information is based on the event occurrence log information extracted from the event occurrence log history information retained in a log information DB 2100A of the management apparatus 200 according to extraction conditions composed of a condition regarding the date and time information ("∘/Δ - □/× (mm/dd)" and a condition regarding the position information ("×× site"). Furthermore, it will be appreciated that the extraction conditions may include conditions regarding other kinds of information than the date and time information and the position information. The same applies to the event occurrence log statistical information illustrated in FIG. 5C.

According to this example, the event occurrence log statistical information that represents the frequency (number of times) of occurrence of each type of event occurrence ("Event A" through "Event J") of the shovel 100 with respect to each of pre-registered multiple operators (for example, "Operator A," "Operator B," "Operator C," ...) is displayed on the display device 230 of the management apparatus 200. Specifically, on the display device 230 in the drawing, the frequency of occurrence of each type of recording trigger event with respect to the shovel 100 operated by specific "Operator A" is displayed in tabular form. The frequency of occurrence of each type of recording trigger event of the shovel 100 with respect to other operators may also be displayed in the same manner in response to a predetermined operation (for example, scrolling, flicking, or the like) on the input device 240. This enables a user of the management apparatus 200 to, for example, analyze the tendency, etc., of the occurrence of a recording trigger event operator by operator. This can serve for a user of the management apparatus 200 providing safety guidance operator by operator based on the results of the analysis.

In the case of this example, a user of the management apparatus 200, for example, sets conditions with respect to the date and time information and the position information and selects the type of the event occurrence log statistical information through the input device 240 on the log related information obtaining operation screen displayed on the display device 230. According to this, the management apparatus 200 (the log related information providing part 2103) generates the event occurrence log statistical information that matches the operation details (set details) of the user and causes the information to be displayed on the display device 230. The same applies to the case of the event occurrence log statistical information of FIG. 5C.

Likewise, the event occurrence log statistical information that represents the frequency (number of times) of occurrence of each type of recording trigger event with respect to each of multiple shovels 100 (for example, "Shovel A," "Shovel B," "Shovel C," ...) may also be displayed on the display device 230 of the management apparatus 200. Furthermore, the event occurrence log statistical information that represents the frequency (number of times) of occurrence of each type of recording trigger event with respect to each of multiple classifications regarding the date and time information (for example, time of day, day of week, etc.) may also be displayed on the display device 230 of the management apparatus 200. Furthermore, the event occurrence log statistical information that represents the frequency (number of times) of occurrence of each type of recording trigger event with respect to each of multiple weather classifications (for example, sunny, cloudy, rainy, snowy, etc.) may also be displayed on the display device 230 of the management apparatus 200. Furthermore, the event occurrence log statistical information that represents the frequency (number of times) of occurrence of each type of recording trigger event with respect to each of multiple worksites may also be displayed on the display device 230 of the management apparatus 200.

Next, FIG. 5C is a diagram illustrating a third example of the event occurrence log related information displayed on the display device 230 of the management apparatus 200. Specifically, FIG. 5C is a diagram illustrating another example of the event occurrence log statistical information.

As illustrated in FIG. 5C, according to this example, the event occurrence log statistical information that represents the frequency (number of times) of each type of recording trigger event each day of the week (Monday through Friday) in a bar chart is displayed on the display device 230 of the management apparatus 200. Specifically, the event occurrence log statistical information is a bar chart of the number of times of occurrence of a recording trigger event of each day of the week including a breakdown by recording trigger event type.

As in this example, the event occurrence log statistical information may be displayed in chart form instead of tabular form. This makes it easier for a user of the management apparatus 200 to visually understand the event occurrence log statistical information.

### [Specific Examples of Log Related Information Obtaining Operation Screen]

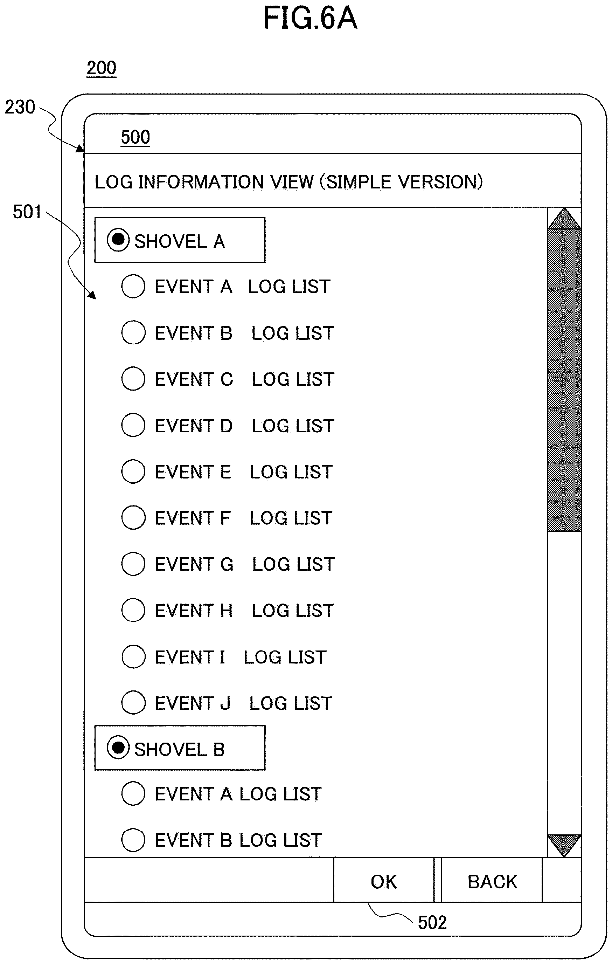

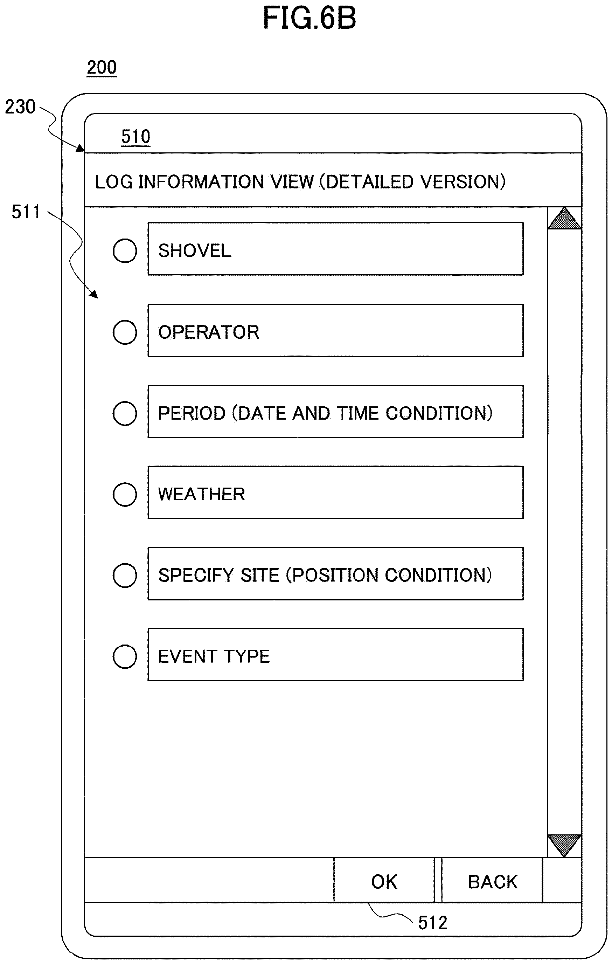

Next, specific examples of the log related information obtaining operation screen displayed on the display device 230 of the management apparatus 200 are described with reference to FIG. 6 (FIGS. 6A and 6B).

First, FIG. 6A is a diagram illustrating an example of the log related information obtaining operation screen (a log related information obtaining operation screen 500) displayed on the display device 230 of the management apparatus 200.

As illustrated in FIG. 6A, the log related information obtaining operation screen 500 includes a selection part 501 for making a selection in the list of the extracted event occurrence log history information of predefined types (specifications) (see FIG. 5A) and a button icon 502 for confirming the type selected in the selection part 501.

In the selection part 501, the types of the extracted event occurrence log history information extracted with different extraction conditions (specifically, conditions with respect to the type of a recording trigger event) are displayed in a list with respect to each pre-registered shovel ("Shovel A," "Shovel B," ...).

A user selects the extracted event occurrence log history information of a desired type from the list displayed in the selection part 501 through the input device 240, and operates the button icon 502. This enables the user to display the desired extracted event occurrence log history information on the display device 230 of the management apparatus 200.

Furthermore, the selection part 501 may be replaced with the display of a list in which to make a selection from predefined types of event occurrence log statistical information. This enables the user to display the event occurrence log statistical information of a desired type on the management apparatus 200 by performing the same operation through the input device 240.

Next, FIG. 6B is a diagram illustrating another example of the log related information obtaining operation screen (a log related information obtaining operation screen 510) displayed on the display device 230 of the management apparatus 200.

As illustrated in FIG. 6B, the log related information obtaining operation screen 510 includes a condition setting part 511 in which to set extraction conditions for extracting the extracted event occurrence log history information and a button icon 512 for confirming the extraction conditions set in the condition setting part 511.

In the condition setting part 511, multiple types of information constituting the event occurrence log information are displayed in a list. A user selects an information type for which to set a condition in the condition setting part 511 through the input device 240 and enters a specific setting. At this point, the user can set conditions for multiple information types in the condition setting part 511. This enables the user to display the extracted event occurrence log information corresponding to a desired extraction condition on the display device 230 of the management apparatus 200.

Furthermore, the condition setting part 511 may be replaced with the display of a list in which to set conditions with respect to the specifications of the event occurrence log statistical information. This enables the user to display the event occurrence log statistical information of specifications corresponding to a desired setting of conditions on the display device 230 of the management apparatus 200 by performing the same operation through the input device 240.

### [Variations and Modifications]

An embodiment is described in detail above. The present disclosure, however, is not limited to the specific embodiment, and variations and modifications may be made within the scope of the claims.

For example, the recording part 3008, which records both the surrounding conditions information and the shovel conditions information according to the above-described embodiment, may record only either one.

Furthermore, while both the recording part 3008 and the transmission part 3011 are provided according to the above-described embodiment and variation, only either one may be provided. For example, of the recording part 3008 and the transmission part 3011, the transmission part 3011 may be omitted or the recording part 3008 may be omitted. In the latter case, when the recording trigger determining part 3007 determines the occurrence of a recording trigger event, the transmission part 3011 may transmit at least one of the surrounding conditions information and the shovel conditions information during the recording period before and after the recording trigger event to the management apparatus 200. Specifically, the same as in the above-described case of the recording part 3008, for example, when the recording trigger determining part 3007 determines the occurrence of a recording trigger event, the transmission part 3011 may immediately read at least one of the surrounding conditions information and the shovel conditions information corresponding to the recording period from the temporary storage part 3009 and transmit the information to the management apparatus 200. Furthermore, the transmission part 3011 may, for example, extract at least one of the surrounding conditions information and the shovel conditions information corresponding to the recording period before and after the occurrence of a recording trigger event from the surrounding conditions information and the shovel conditions information over the entire period from the start to the stop of the shovel 100 retained in the temporary storage part 3009 and transmit the information to the management apparatus 200 while the shovel 100 is stopped.

Furthermore, according to the above-described embodiment and variations, the surrounding conditions information and/or the shovel conditions information during the recording period including a time before, the time of, and a time after the occurrence of a recording trigger event are recorded or transmitted to the management apparatus 200. This configuration, however, is nonlimiting. For example, only information before the occurrence of a recording trigger event may be recorded or transmitted to the management apparatus 200. Furthermore, for example, only information at the time of the occurrence of a recording trigger event may be recorded or transmitted to the management apparatus 200. Furthermore, for example, only information after the occurrence of a recording trigger event may be recorded or transmitted to the management apparatus 200. That is, the recording part 3008 may record at least one of the surrounding conditions information and the shovel conditions information at one or more of a time before the occurrence, the time of the occurrence, and a time after the occurrence of a recording trigger event. Furthermore, the transmission part 3011 may transmit at least one of the surrounding conditions information and the shovel conditions information at one or more of a time before the occurrence, the time of the occurrence, and a time after the occurrence of a recording trigger event to the management apparatus 200.

Furthermore, according to the above-described embodiment and variations, the safety function of the shovel 100 corresponding to the recording trigger event may include other safety functions different from the above-described first safety function and second safety function.

For example, the safety function of the shovel 100 may include an interference prevention function for the attachment and the cabin. The interference prevention function is the function of preventing the interference between the end attachment such as the bucket 6 and the cabin 10. The interference prevention function may include the function of restricting (decelerating or stopping) the motion of the attachment when the distance between the end attachment and the cabin 10 is relatively reduced. Furthermore, the interference prevention function may also include the function of imparting information to the operator or the like inside the cabin through the display device 50 or the sound output device 52 when the distance between the end attachment and the cabin 10 is relatively reduced. Furthermore, the interference prevention function may also include the function of transmitting a signal for imparting information to the remote operator to the management apparatus 200 through the display device 230 or the like when the distance between the end attachment and the cabin 10 is relatively reduced.

Furthermore, for example, the safety function of the shovel 100 may include an alarm function to notify a worker, the operator, etc., that the weight of a suspended load during the crane work of the shovel 100 exceeds a predetermined reference level (a crane work overload alarm function).

Furthermore, according to the above-described embodiment and variations, three or more (types of) information obtaining devices that obtain information on an object in an area surrounding the shovel 100 may be provided. In this case, the three or more information obtaining devices may or may not include the image capturing device 40 and the nearby object information obtaining device 45. Furthermore, in this case, for each of the three or more information obtaining devices, whether the detection of a monitoring target based on its output corresponds to the recording trigger event or the condition under which the detection of a monitoring target based on the output corresponds to the recording trigger event may be different. Furthermore, in this case, the recording trigger event may include the detection of a monitoring target based on the output of an information obtaining part whose reliability with respect to the detection of a monitoring target is relatively high among the three or more information obtaining parts.

Furthermore, the shovel 100, which operates according to the operation of the operator riding in the cabin 10 or the remote control of the remote operator of the management apparatus 200 according to the above-described embodiment and variations, may autonomously make various determinations as to surrounding conditions, etc., and autonomously operate based on the determination results. That is, the shovel 100 may perform autonomous operation. In this case, the controller 30 can, for example, achieve autonomous operation by autonomously controlling a hydraulic pressure control valve for operation the same as in the case of remote control.

Lastly, the present invention is based upon and claims priority to Japanese Patent Application No. 2019-146716, filed on August 8, 2019, the entire contents of which are hereby incorporated herein by reference.

### DESCRIPTION OF THE REFERENCE NUMERALS

30 controller
40 image capturing device (first information obtaining device)
40B, 40L, 40R camera
45 nearby object information obtaining device (second information obtaining device)
45BL, 45BR, 45L, 45R sensor
50 display device
52 sound output device
54 input device
54a recording request operation part
100 shovel
200 management apparatus (information processing apparatus)
210 control device
220 communications device
230 display device
240 input device
2101 information obtaining part
2102 storage part
2103 log related information providing part
3001 object detecting part
3002 object detection time safety control part
3003 unstable condition determining part
3004 stabilization control part
3005 theft determining part
3006 theft prevention control part
3007 recording trigger determining part
3008 recording part
3009 temporary storage part
3010 storage part
3011 transmission part
S1 surrounding conditions information obtaining device
S2 shovel conditions information obtaining device
T1 communications device

## Claims

1. A shovel comprising:
a recording part configured to record log information in a storage part, the log information including at least one of information on conditions surrounding the shovel and information on conditions of the shovel at each of a time before, a time of, and a time after an occurrence of a predetermined event where at least one of safety and security of the shovel is relatively reduced.

2. The shovel as claimed in claim 1, wherein the information on the conditions surrounding the shovel includes at least one of: image information of an area surrounding the shovel; information on a reflected signal from an object in the area surrounding the shovel; and information on a sound in the area surrounding the shovel.

3. The shovel as claimed in claim 1 or 2,
wherein the information on the conditions of the shovel includes at least one of: position information of the shovel; information on an operation state of the shovel; information on a pose state of the shovel; information on a motion state of the shovel; information on a condition of a hydraulic drive system of the shovel; information on a condition of an electric drive system of the shovel; and information on indoor conditions of a cabin of the shovel.

4. The shovel as claimed in any of claims 1 to 3, wherein the predetermined event includes at least one of: a release of a gate lock; starting an operation for swinging in a state where no operation for swinging is performed; starting an operation for traveling in a state where no operation for traveling is performed; performing an operation to lower a boom; detection of a predetermined object in an area surrounding the shovel by an object detecting function of the shovel; the shovel being in an unstable condition or the shovel showing a sign of an unstable condition; determination of a theft of the shovel by a theft determining function of the shovel; activation of a safety function of the shovel; activation of a security function of the shovel; and acceptance of a predetermined operation input from a user that imparts a decrease in at least one of safety and security of the shovel.

5. The shovel as claimed in claim 4, wherein the predetermined event includes that the predetermined object is detected by the object detecting function and the detected predetermined object is closer to the shovel than a predetermined reference.

6. The shovel as claimed in claim 4 or 5, comprising:
different types of information obtaining parts configured to obtain information on an object in the area surrounding the shovel,
wherein for each of the information obtaining parts, whether the detection of the predetermined object based on an output thereof corresponds to the predetermined event or a condition under which the detection of the predetermined object based on an output thereof corresponds to the predetermined event is different.

7. The shovel as claimed in claim 6, wherein the information obtaining parts include a first information obtaining part and a second information obtaining part, the second information obtaining part having a range within which information is obtainable, the range being larger than and at least overlapping a range within which information is obtainable by the first information obtaining part in a direction toward or away from the shovel.

8. The shovel as claimed in claim 7, wherein the predetermined event includes the detection of the predetermined object based on an output of an information obtaining part whose reliability with respect to the detection of the predetermined object is relatively high among the information obtaining parts.

9. The shovel as claimed in claim 6, wherein the information obtaining parts include a first information obtaining part and a second information obtaining part, further comprising:
a notification part configured to notify at least one of an inside of a cabin of the shovel and the area surrounding the shovel when the predetermined object is detected based on an output of the first information obtaining part by the object detecting function; and
a motion restriction part configured to restrict a motion of the shovel when the predetermined object is detected based on an output of the second information obtaining part by the object detecting function,
wherein the predetermined event includes the detection of the predetermined object based on the output of the second information obtaining part.

10. The shovel as claimed in any of claims 7 to 9, wherein
the first information obtaining part is an image capturing device configured to capture an image of the area surrounding the shovel, and
the second information obtaining part is a LIDAR configured to obtain reflected light from the object in the area surrounding the shovel.

11. The shovel as claimed in any of claims 4 through 10, wherein
the predetermined object includes a person and an obstacle other than the person, and
of detection of the person by the object detecting function and detection of the obstacle by the object detecting function, the predetermined event includes only a former.

12. The shovel as claimed in any of claims 1 to 11, wherein
at least one of the information on the conditions surrounding the shovel and the information on the conditions of the shovel is accumulated during a period from a start to a stop of the shovel, and
the recording part is configured to record, of the accumulated information, information at each of the time before, the time of, and the time after the occurrence of the predetermined event in the storage part as the log information, the storage part being nonvolatile.

13. The shovel as claimed in claim 12, comprising:
another storage part configured to accumulate the at least one of the information on the conditions surrounding the shovel and the information on the conditions of the shovel during the period from the start to the stop of the shovel,
wherein the recording part is configured to record, of the information accumulated in said another storage part, information at each of the time before, the time of, and the time after the occurrence of the predetermined event in the storage part as the log information, the storage part being nonvolatile.

14. The shovel as claimed in claim 12, wherein
the nonvolatile storage part is configured to accumulate the at least one of the information on the conditions surrounding the shovel and the information on the conditions of the shovel during the period from the start to the stop of the shovel, and
the recording part is configured to record, of the information accumulated in the storage part, the information at each of the time before, the time of, and the time after the occurrence of the predetermined event in the storage part as the log information, by changing the information at each of the time before, the time of, and the time after the occurrence of the predetermined event to an unerasable state.

15. The shovel as claimed in claim 13 or 14
wherein the recording part is configured to record the log information in the nonvolatile storage part when the shovel is stopped after the occurrence of the predetermined event.

16. The shovel as claimed in any of claims 1 to 15, further comprising:
a transmission part configured to transmit the log information recorded in the storage part to a predetermined external apparatus.

17. An information processing apparatus, wherein the information processing apparatus is configured to cause a shovel to record, or transmit to a predetermined external apparatus, log information including at least one of information on conditions surrounding the shovel and information on conditions of the shovel at each of a time before, a time of, and a time after an occurrence of a predetermined event where at least one of safety and security of the shovel is relatively reduced.

18. The information processing apparatus as claimed in claim 17, wherein the information processing apparatus is configured to receive the log information from the shovel and record the log information in a storage part.

19. The information processing apparatus as claimed in claim 17 or 18, wherein the information processing apparatus is configured to perform at least one of displaying a setting of the predetermined event on a display device and determining the setting of the predetermined event in response to an input from a user.
